# EUROPEAN PATENT APPLICATION

(11) **EP 4 280 334 A1**
(43) Date of publication of application: **22.11.2023**
(21) Application number: 21919533.6
(22) Date of filing: 26.10.2021
(51) Int. Cl.: H01M 10/0562, H01M 10/0585, H01M 50/202, H01M 50/204, H01M 50/547, H01M 50/55, H01M 50/572

(54) **BATTERY AND LAMINATED BATTERY**

(30) Priority: 15.01.2021 JP 2021004958
(71) Applicant: Panasonic Intellectual Property Management Co., Ltd., Osaka-shi, Osaka 540-6207 (JP)
(72) Inventor: KOGA Eiichi, Chuo-ku, Tokyo (JP)
(74) Representative: Grünecker Patent- und Rechtsanwälte PartG mbB
(86) International application number: PCT/JP2021/039386
(87) International publication number: WO 2022/153642

(57) **Abstract**

A battery includes: a power generation element including at least one battery cell including an electrode layer, a counter electrode layer, and a solid electrolyte layer positioned between the electrode layer and the counter electrode layer; a first insulation film; an electrode terminal electrically connected to the electrode layer; and a counter electrode terminal electrically connected to the counter electrode layer. The power generation element includes an electrode main surface that is a main surface formed of a surface of the electrode layer, a counter electrode main surface that faces the electrode main surface and is a main surface formed of a surface of the counter electrode layer, and a side surface that connects the electrode main surface and the counter electrode main surface. The first insulation film includes a first side surface covering portion that covers the side surface and a first main surface covering portion that is connected with the first side surface covering portion and covers the counter electrode main surface. The electrode terminal includes a second side surface covering portion that covers the first side surface covering portion and an electrode contact portion that is connected with the second side surface covering portion and is joined to the electrode main surface. The counter electrode terminal is joined to the counter electrode main surface. The electrode terminal further includes a second main surface covering portion that is connected with the second side surface covering portion and covers the first main surface covering portion.

## Description

### Technical Field

The present disclosure relates to a battery and a laminated battery.

### Background Art

In batteries, various voltages, outputs, and battery capacities are implemented by extracting a current from power generation element portions of batteries by using a lead wire and connecting the batteries in series and/or parallel. As a technique related to such battery structure and connection of batteries, for example, there is disclosed in PTL 1 an all-solid-state battery with a structure in which an insulant is used for a side wall of a power generation element and a current is extracted by a tab lead. Additionally, there is disclosed in PTL 2 an assembled battery in which multiple batteries are connected to each other by a tab lead.

### Citation List

### Patent Literature

PTL 1: Japanese Unexamined Patent Application Publication No. 2007-335294
PTL 2: Japanese Unexamined Patent Application Publication No. 2005-216631

### Summary of Invention

### Technical Problem

In the techniques according to the related art, a battery with high reliability is demanded.

### Solution to Problem

A battery according to an aspect of the present disclosure includes: a power generation element including at least one battery cell including an electrode layer, a counter electrode layer, and a solid electrolyte layer positioned between the electrode layer and the counter electrode layer; a first insulation film; an electrode terminal electrically connected to the electrode layer; and a counter electrode terminal electrically connected to the counter electrode layer, in which the power generation element includes an electrode main surface that is a main surface formed of a surface of the electrode layer, a counter electrode main surface that faces the electrode main surface and is a main surface formed of a surface of the counter electrode layer, and a side surface that connects the electrode main surface and the counter electrode main surface, the first insulation film includes a first side surface covering portion that covers the side surface and a first main surface covering portion that is connected with the first side surface covering portion and covers the counter electrode main surface, the electrode terminal includes a second side surface covering portion that covers the first side surface covering portion and an electrode contact portion that is connected with the second side surface covering portion and is joined to the electrode main surface, the counter electrode terminal is joined to the counter electrode main surface, and the electrode terminal further includes a second main surface covering portion that is connected with the second side surface covering portion and covers the first main surface covering portion.

A battery according to an aspect of the present disclosure includes: a power generation element including at least one battery cell including an electrode layer, a counter electrode layer, and a solid electrolyte layer positioned between the electrode layer and the counter electrode layer; a first insulation film; a second insulation film; and an electrode terminal electrically connected to the electrode layer, in which the power generation element includes an electrode main surface that is a main surface formed of a surface of the electrode layer, a counter electrode main surface that faces the electrode main surface and is a main surface formed of a surface of the counter electrode layer, and a side surface that connects the electrode main surface and the counter electrode main surface, the first insulation film includes a first side surface covering portion that covers the side surface and a first main surface covering portion that is connected with the first side surface covering portion and covers the counter electrode main surface, the second insulation film covers the counter electrode main surface, an opening that exposes a part of the counter electrode main surface is formed in the second insulation film, the electrode terminal includes a second side surface covering portion that covers the first side surface covering portion and an electrode contact portion that is connected with the second side surface covering portion and is joined to the electrode main surface, and the electrode terminal further includes a second main surface covering portion that is connected with the second side surface covering portion and covers the first main surface covering portion.

A laminated battery according to an aspect of the present disclosure includes: one first battery; and one or more second batteries laminated on the one first battery, in which the one first battery is the battery described above, and the one or more second batteries are laminated on the electrode main surface of the one first battery.

### Advantageous Effects of Invention

According to the present disclosure, a battery having high reliability and the like can be implemented.

### Brief Description of Drawings

[Fig. 1] Fig. 1 is a sectional view and a plan view illustrating a schematic configuration of a battery according to an Embodiment 1.
[Fig. 2] Fig. 2 is a sectional view and a plan view illustrating a schematic configuration of a battery according to a Modification 1 of the Embodiment 1.
[Fig. 3] Fig. 3 is a sectional view and a plan view illustrating a schematic configuration of a battery according to a Modification 2 of the Embodiment 1.
[Fig. 4] Fig. 4 is a sectional view and a plan view illustrating a schematic configuration of a battery according to a Modification 3 of the Embodiment 1.
[Fig. 5] Fig. 5 is a sectional view and a plan view illustrating a schematic configuration of a battery according to a Modification 4 of the Embodiment 1.
[Fig. 6] Fig. 6 is a sectional view and a plan view illustrating a schematic configuration of a battery according to a Modification 5 of the Embodiment 1.
[Fig. 7] Fig. 7 is a sectional view and a plan view illustrating a schematic configuration of a battery according to a Modification 6 of the Embodiment 1.
[Fig. 8] Fig. 8 is a sectional view and a plan view illustrating a schematic configuration of a battery according to a Modification 7 of the Embodiment 1.
[Fig. 9A] Fig. 9A is a sectional view and a plan view illustrating a schematic configuration of a battery according to a Modification 8 of the Embodiment 1.
[Fig. 9B] Fig. 9B is a sectional view illustrating a schematic configuration of another battery according to the Modification 8 of the Embodiment 1.
[Fig. 10] Fig. 10 is a sectional view illustrating a schematic configuration of a battery according to a Modification 9 of the Embodiment 1.
[Fig. 11] Fig. 11 is a sectional view and a plan view illustrating a schematic configuration of a battery according to an Embodiment 2.
[Fig. 12] Fig. 12 is a sectional view illustrating a schematic configuration of another battery according to the Embodiment 2.
[Fig. 13] Fig. 13 is a sectional view and a plan view illustrating a schematic configuration of a battery according to an Embodiment 3.

### Description of Embodiments

### (Summary of Present Disclosure)

A battery according to an aspect of the present disclosure includes: a power generation element including at least one battery cell including an electrode layer, a counter electrode layer, and a solid electrolyte layer positioned between the electrode layer and the counter electrode layer; a first insulation film; an electrode terminal electrically connected to the electrode layer; and a counter electrode terminal electrically connected to the counter electrode layer, in which the power generation element includes an electrode main surface that is a main surface formed of a surface of the electrode layer, a counter electrode main surface that faces the electrode main surface and is a main surface formed of a surface of the counter electrode layer, and a side surface that connects the electrode main surface and the counter electrode main surface, the first insulation film includes a first side surface covering portion that covers the side surface and a first main surface covering portion that is connected with the first side surface covering portion and covers the counter electrode main surface, the electrode terminal includes a second side surface covering portion that covers the first side surface covering portion and an electrode contact portion that is connected with the second side surface covering portion and is joined to the electrode main surface, the counter electrode terminal is joined to the counter electrode main surface, and the electrode terminal further includes a second main surface covering portion that is connected with the second side surface covering portion and covers the first main surface covering portion.

With this configuration, for example, a battery that has high reliability even if the battery is made thinner and/or wider can be implemented. A connection structure according to the related art in which a current is drawn out by using a lead wire terminal has a short-circuit risk and a difficulty that the structure is easily deformed by impact. Such problems become more evident in a case where the battery is made smaller, thinner, and wider and in a case where the battery is multi-layered. Further, with this configuration, since the electrode terminal is routed around so as to cover the counter electrode main surface, the first insulation film can be covered so as to be sandwiched from outside. Moreover, both the electrode terminal and counter electrode terminal can be joined with a substrate and the like on a counter electrode main surface side of the power generation element.

According to the configuration of the battery in the present aspect, since the electrode terminal and the counter electrode terminal are joined to the power generation element in which the layers are bound by the first insulation film from the side surface of the power generation element, reduction in size is possible, and also short-circuit due to the terminals and a damage in the terminals are less likely to occur than a case where the power generation element, the first insulation film, and the terminals are integral with each other and a lead wire is drawn out. Additionally, joining with the substrate and the like can be made by the counter electrode terminal joined to the counter electrode main surface. Thus, the flex resistance of the battery can be improved by joining with the substrate and the like. Therefore, a battery having high reliability is implemented.

For example, the counter electrode terminal may have a plate shape, and an entirety of the counter electrode terminal may be overlapped with the counter electrode main surface in plan view.

With this, the counter electrode terminal has a structure in which the counter electrode terminal does not protrude from the counter electrode main surface in plan view, and thus the battery can be made much smaller. Additionally, since the counter electrode terminal has the plate shape, the electrode terminal and the counter electrode main surface are joined with each other in a wide area, and thus the battery and the substrate can be joined rigidly in a case where the battery is mounted on the substrate. Moreover, a resistance in the counter electrode terminal that is a conductive route in a case where the battery is joined with the substrate is decreased, and local heating is reduced.

For example, in the battery, the counter electrode terminal may be one of a plurality of counter electrode terminals.

With this, the flex stress and the durability against the hot-cold cycle in a case where the battery is mounted on the substrate can be further improved. Additionally, in a case where the counter electrode terminal is made wider, a defect due to remaining of air, solvent, binder, or the like when forming the counter electrode terminal is reduced by forming the divided counter electrode terminals.

For example, at least one of the electrode terminal or the counter electrode terminal may include conductive resin.

With this, stress on the power generation element can be absorbed by the impact resistance of the conductive resin. Additionally, when the electrode terminal and the counter electrode terminal are joined with the mounting substrate, deformation can be suppressed while absorbing the flex stress and the thermal shock from the hot-cold cycle and the like on the battery, and thus the durability of the battery is improved.

For example, the battery may further include: an electrode solder layer that covers the electrode terminal and contains solder as a main component; and a counter electrode solder layer that covers the counter electrode terminal and contains solder as a main component.

With this, in a case where the battery is mounted on the substrate, joining is made between the substrate and the solder, and high sticking properties are obtained. Additionally, for example, the battery and the substrate can be joined with each other with good productivity in a mass-production process such as reflow mounting.

For example, each of the electrode solder layer and the counter electrode solder layer may be formed of a solder plating film.

With this, for example, in a case where the terminal includes a metal component and the like such as silver particles contained in the conductive resin, movement of the metal component that is likely to migrate can be suppressed by the solder plating film. Thus, the reliability of the battery is improved.

For example, the solder plating film may include a nickel plating foundation film and a tin plating film formed on the nickel plating foundation film.

With this, migration of the metal component such as the silver particles in the conductive resin can be suppressed by the nickel plating foundation film. Additionally, with the tin plating film on the front layer, the solder wettability of the joining portion with the substrate is enhanced, and the sticking properties of the battery to the substrate are improved. Thus, the reliability of the battery is improved.

For example, the battery may further include: a substrate that is arranged to face the power generation element, in which the counter electrode terminal may be positioned between the substrate and the counter electrode layer, and the substrate may include an electrode connection portion that is joined with the electrode terminal and is electrically connected with the electrode layer and a counter electrode connection portion that is joined with the counter electrode terminal and is electrically connected with the counter electrode layer.

With this, the power generation element is joined to the substrate, and thus the flex resistance of the battery is improved.

For example, the battery may further include: a second insulation film that covers a part of the counter electrode main surface, in which the second insulation film may cover an outer periphery of the counter electrode terminal in plan view.

With this, the outer periphery of the counter electrode terminal that is a starting point of delamination of the counter electrode terminal due to the flex deformation of the power generation element can be protected by the second insulation film, and thus the delamination of the counter electrode terminal can be suppressed. Thus, the sticking properties of the counter electrode terminal to the power generation element are improved, and the flex resistance of the battery is further improved. Additionally, even if local stress acts on the outer periphery of the counter electrode terminal, the stress can be distributed to the second insulation film. Moreover, with the outer periphery of the counter electrode terminal being covered with the second insulation film, the isolation properties between the counter electrode terminal and the electrode terminal are improved.

For example, an outer periphery edge portion of the counter electrode terminal in plan view may be sandwiched between the counter electrode main surface and the second insulation film.

With this, the outer periphery edge portion of the counter electrode terminal is covered with the second insulation film from the opposite side of the counter electrode main surface, and thus the delamination from the outer periphery due to the flex deformation is suppressed, and the sticking properties with the power generation element are improved. Thus, the flex resistance of the battery is improved.

A battery according to another aspect of the present disclosure includes: a power generation element including at least one battery cell including an electrode layer, a counter electrode layer, and a solid electrolyte layer positioned between the electrode layer and the counter electrode layer; a first insulation film; a second insulation film; and an electrode terminal electrically connected to the electrode layer, in which the power generation element includes an electrode main surface that is a main surface formed of a surface of the electrode layer, a counter electrode main surface that faces the electrode main surface and is a main surface formed of a surface of the counter electrode layer, and a side surface that connects the electrode main surface and the counter electrode main surface, the first insulation film includes a first side surface covering portion that covers the side surface and a first main surface covering portion that is connected with the first side surface covering portion and covers the counter electrode main surface, the second insulation film covers the counter electrode main surface, an opening that exposes a part of the counter electrode main surface is formed in the second insulation film, the electrode terminal includes a second side surface covering portion that covers the first side surface covering portion and an electrode contact portion that is connected with the second side surface covering portion and is joined to the electrode main surface, and the electrode terminal further includes a second main surface covering portion that is connected with the second side surface covering portion and covers the first main surface covering portion.

With this, since the electrode terminal are joined to the power generation element in which the layers are bound by the first insulation film from the side surface of the power generation element, reduction in size is possible, and also short-circuit due to the terminals and a damage in the terminals are less likely to occur than a case where the power generation element, the first insulation film, and the electrode terminal are integral with each other and a lead wire is drawn out. Additionally, joining with the substrate and the like can be made in a portion that is exposed by the opening in the second insulation film. Thus, the flex resistance of the battery can be improved by joining with the substrate and the like. Moreover, since the electrode terminal is routed around so as to cover the counter electrode main surface, the first insulation film can be covered so as to be sandwiched from outside. Furthermore, both the electrode terminal and counter electrode terminal can be joined with the substrate and the like on the counter electrode main surface side of the power generation element. Therefore, a battery having high reliability is implemented.

For example, the battery may further include: a substrate that is arranged to face the power generation element, in which the second insulation film may be positioned between the substrate and the counter electrode layer, and the substrate may include an electrode connection portion that is joined with the electrode terminal and is electrically connected with the electrode layer and a counter electrode connection portion that is joined with a portion in the counter electrode main surface that is exposed by the opening and is electrically connected with the counter electrode layer.

With this, the power generation element is joined to the substrate, and thus the flex resistance of the battery is improved.

For example, the first insulation film and the second insulation film may be connected with each other.

With this, the first insulation film and the second insulation film form a continuous covering film, and thus the reinforcement properties are further enhanced, and the flexural resistance of the battery is improved. Thus, the flex resistance of the battery is improved.

For example, the second insulation film may contain resin.

With this, stress generated due to a difference of the thermal expansion coefficients between the power generation element and the counter electrode terminal can be absorbed by the impact resistance performance of the resin, and thus the delamination of the counter electrode terminal can be suppressed. Additionally, the second insulation film functions also as a protection layer that covers the counter electrode main surface and performs the impact resistance function, and thus occurrence of damage and a flaw in the power generation element in a handling process can be reduced.

For example, in plan view, a length of the electrode contact portion from the side surface may be longer than a length of the second main surface covering portion from the side surface.

With this, the joining area between the electrode contact portion and the electrode main surface can be increased, and thus the electrode terminal and the electrode main surface can be joined with each other rigidly, and also the resistance in the joining portion between the electrode terminal and the electrode main surface is decreased.

For example, the first insulation film may cover an end portion of the electrode terminal.

With this, delamination of the electrode terminal from the end portion of the electrode terminal due to stress due to flex and a thermal impact and the like from solder-mounting and the like can be suppressed.

For example, the side surface may include a first side surface and a second side surface facing the first side surface, and the first insulation film may cover the first side surface and the second side surface.

With this, with an effect of sandwiching and binding the layers in the power generation element from the facing side surfaces by the first insulation film, delamination of the layers can be effectively suppressed, and the reliability of the battery is improved.

For example, the first insulation film may contain resin.

With this, in a case where stress is generated in the electrode terminal due to flex and expansion and contraction in a charge and discharge cycle, the stress can be absorbed by the impact resistance performance of the resin. Thus, occurrence of delamination and a crack of the electrode terminal can be suppressed, and the reliability of the battery is improved.

For example, the at least one battery cell may include a plurality of battery cells, and the plurality of battery cells may be electrically connected in series and laminated.

With this configuration, a high voltage can be obtained; thus, a high energy battery with high reliability can be implemented.

For example, the solid electrolyte layer may include solid electrolyte having lithium-ion conductivity.

With this configuration, a lithium-ion battery including a solid electrolyte and having high reliability can be implemented.

For example, a laminated battery includes: one first battery; and one or more second batteries laminated on the one first battery, in which the one first battery is the above-described battery, and the one or more second batteries are laminated on the electrode main surface of the one first battery.

With this, the above-described battery is included as the first battery, and thus the reliability of a laminated battery with a high voltage and/or a large capacity can be improved.

Embodiments are specifically described below with reference to the drawings.

Note that, any of the Embodiments described below indicate a comprehensive or specific example. Numerical values, shapes, materials, constituents, arrangement position and connection mode of the constituents, and the like indicated in the Embodiments below are examples and not intended to limit the present disclosure. Additionally, out of the constituents in the Embodiments below, a constituent that is not described in an independent claim is described as an optional constituent.

Moreover, in the present specification, a term indicating a relationship between elements such as parallel and a term indicating a shape of an element such as a rectangular and a numerical value range are expressions representing not only the strict means but also meaning that there is also included a substantially equivalent range that is, for example, a difference of a few percent.

Furthermore, each diagram is not necessarily a strict illustration. In each diagram, substantially the same configurations are provided with the same reference sign, and duplicated descriptions are omitted or simplified.

Additionally, in the present specification and the drawings, an x-axis, a y-axis, and a z-axis indicate the three axes of a three-dimensional Cartesian coordinate system. In each Embodiment, a z-axis direction is a thickness direction of the battery. Moreover, in the present specification, the "thickness direction" is a direction perpendicular to a plane in which the layers are laminated.

Furthermore, in the present specification, "in plan view" means a case where the battery is viewed in a lamination direction in the battery, and a "thickness" in the present specification is a length in the lamination direction of the batteries and the layers. That is, the direction in which layers are laminated is a thickness direction of each layer.

Additionally, in the present specification, "in" and "out" in terms such as "inside" and "outside" represent in and out in a case where a center side of the battery is defined as the inside.

Moreover, in the present specification, the terms "upper" and "lower" in the configuration of the battery do not indicate an upper direction (vertically above) and a lower direction (vertically below) in an absolute spatial recognition and are used as terms defined by a relative positional relationship based on the lamination order in the lamination configuration. Furthermore, the terms "above" and "below" are applied for not only a case where two constituents are arranged at an interval from each other and another constituent exists between the two constituents but also a case where two constituents are arranged to be closely attached with each other and the two constituents are in contact with each other.

### (Embodiment 1)

First, a battery according to an Embodiment 1 is described.

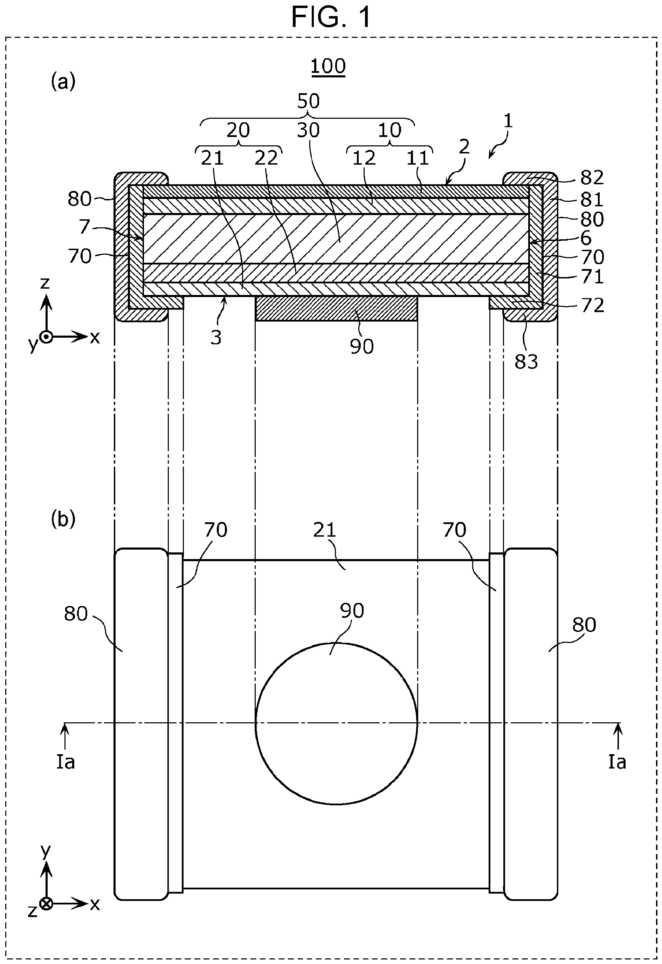

Fig. 1 is a sectional view and a plan view illustrating a schematic configuration of a battery according to the present embodiment. Specifically, Fig. 1(a) is a sectional view of a battery 100 according to the present embodiment, and Fig. 1(b) is a plan view in which the battery 100 is viewed from a lower side in the z-axis direction. In Fig. 1(a), a cross section at a position indicated by the Ia-Ia line in Fig. 1(b) is illustrated.

As illustrated in Fig. 1, the battery 100 has a cuboid structure with a small thickness. The battery 100 includes a power generation element 1, a first insulation film 70, an electrode terminal 80, and a counter electrode terminal 90, the power generation element 1 including at least one battery cell 50 including an electrode layer 10, a counter electrode layer 20, and a solid electrolyte layer 30. The battery 100 is an all-solid-state battery, for example. The battery 100 is used by being mounted on a substrate, for example. In a case where the battery 100 is mounted on the substrate, for example, the electrode terminal 80 and the counter electrode terminal 90 of the battery 100 are joined to a conductive connection portion such as wiring of the substrate. Thus, the battery 100 can be mounted on a rigid substrate, and therefore the flex resistance of the battery 100 can be improved.

In the present embodiment, the power generation element 1 includes a single battery cell 50. The shape of the power generation element 1 is a cuboid, for example. Note that, the shape of the power generation element 1 is not limited to a cuboid and may be another shape such as a column or a polygonal column. The power generation element 1 includes an electrode main surface 2 that is a main surface formed of a surface of the electrode layer 10, a counter electrode main surface 3 that is a main surface facing the electrode main surface 2 and formed of a surface of the counter electrode layer 20, and side surfaces that connect the electrode main surface 2 and the counter electrode main surface 3. In the present embodiment, the side surfaces of the power generation element 1 are formed of four surfaces that are two pairs of two facing surfaces and include a first side surface 6 and a second side surface 7 that are surfaces on the sides of short sides of the power generation element 1 in plan view.

The electrode main surface 2 and the counter electrode main surface 3 are surfaces perpendicular to a lamination direction in the power generation element 1. The electrode main surface 2 is formed of a main surface in the electrode layer 10 that is on an opposite side to a solid electrolyte layer 30 side. The counter electrode main surface 3 is formed of a main surface in the counter electrode layer 20 that is on an opposite side to a solid electrolyte layer 30 side.

The first side surface 6 and the second side surface 7 are surfaces that extend from end portions of the electrode main surface 2 and the counter electrode main surface 3 in a direction crossing the electrode main surface 2 and the counter electrode main surface 3 to connect the electrode main surface 2 and the counter electrode main surface 3. In the present embodiment, the first side surface 6 and the second side surface 7 are surfaces parallel to each other in the lamination direction in the power generation element 1. The first side surface 6 and the second side surface 7 have a positional relationship to face each other. Additionally, the first side surface 6 and the second side surface 7 are parallel to each other.

At least a part of the main surface and the side surface of the power generation element 1 may be processed into a rough surface with concavity and convexity in terms of improvement in the adhesiveness with the first insulation film 70. For example, at least a part of the main surface and the side surface of the power generation element 1 may be rubbed with sandpaper of #800 to #1000 to be processed into a rough surface with concavity and convexity, and thereafter the first insulation film 70 may be applied and formed. The surface roughness in this case has the maximum height Rz of 10 µm or greater and 20 µm or smaller, for example. With this, the surface energy of the power generation element 1 can be dispersed, and thus an effect of surface tension is reduced, the wettability is improved when the first insulation film 70 is applied, and the shape accuracy can be enhanced. Thus, the positional relationship accuracy between the first insulation film 70 and the electrode terminal 80 formed on the first insulation film 70 is improved, and therefore an effect of suppressing short-circuit is obtained. Additionally, with an effect of an increase in the surface roughness, the surface area of the power generation element 1 is increased, and the sticking properties between the surface of the power generation element 1 and the first insulation film 70 can be improved with the operational effect.

The battery cell 50 includes the electrode layer 10, the counter electrode layer 20, and the solid electrolyte layer 30 positioned between the electrode layer 10 and the counter electrode layer 20. The electrode layer 10 includes an electrode current collector 11 and an electrode active material layer 12 positioned between the electrode current collector 11 and the solid electrolyte layer 30. The counter electrode layer 20 includes a counter electrode current collector 21 and a counter electrode active material layer 22 positioned between the counter electrode current collector 21 and the solid electrolyte layer 30. In other words, the battery cell 50 includes the electrode current collector 11, the electrode active material layer 12 arranged in contact with the electrode current collector 11, the counter electrode current collector 21, the counter electrode active material layer 22 arranged in contact with the counter electrode current collector 21, and the solid electrolyte layer 30 arranged between the electrode active material layer 12 and the counter electrode active material layer 22 and including a solid electrolyte. The electrode active material layer 12 and the counter electrode active material layer 22 are arranged between the electrode current collector 11 and the counter electrode current collector 21. The battery cell 50 has a structure in which the electrode layer 10, the solid electrolyte layer 30, and the counter electrode layer 20 are laminated in this order. In more detail, the battery cell 50 has a structure in which the electrode current collector 11, the electrode active material layer 12, the solid electrolyte layer 30, the counter electrode active material layer 22, and the counter electrode current collector 21 are laminated in this order.

Each of the electrode current collector 11, the electrode active material layer 12, the solid electrolyte layer 30, the counter electrode active material layer 22, and the counter electrode current collector 21 is rectangular in plan view. The shape of the electrode current collector 11, the electrode active material layer 12, the solid electrolyte layer 30, the counter electrode active material layer 22, and the counter electrode current collector 21 in plan view is not particularly limited and may be a shape other than rectangular such as circular, oval, or polygonal.

The electrode current collector 11, the electrode active material layer 12, the solid electrolyte layer 30, the counter electrode active material layer 22, and the counter electrode current collector 21 have the same shape, position, and size in plan view. The electrode current collector 11, the electrode active material layer 12, the solid electrolyte layer 30, the counter electrode active material layer 22, and the counter electrode current collector 21 may have different shapes, positions, and sizes from each other in plan view. For example, in plan view, the counter electrode active material layer 22 may be greater than the electrode active material layer 12. Additionally, the solid electrolyte layer 30 may be greater than the electrode active material layer 12 and the counter electrode active material layer 22, may cover side surfaces of each of the electrode active material layer 12 and the counter electrode active material layer 22, and may be in contact with the electrode current collector 11 and the electrode active material layer 12.

In the present embodiment, a main surface in the electrode current collector 11 on the opposite side to an electrode active material layer 12 side forms the electrode main surface 2.

The electrode active material layer 12 is laminated in contact with one main surface of the electrode current collector 11. Note that, another layer such as a joining layer formed of a conductive material may be provided between the electrode current collector 11 and the electrode active material layer 12. Additionally, the electrode layer 10 may not include the electrode current collector 11 and, for example, a current collector of another electrode layer 10 or counter electrode layer 20, a terminal for extraction, a connection layer connected with other battery, and the like may function as a current collector of the electrode active material layer 12. That is, the electrode layer 10 may include only the electrode active material layer 12 out of the electrode current collector 11 and the electrode active material layer 12.

In the present embodiment, a main surface in the counter electrode current collector 21 on the opposite side to the counter electrode active material layer 22 side forms the counter electrode main surface 3.

Additionally, the counter electrode active material layer 22 is laminated in contact with one main surface of the counter electrode current collector 21. Note that, another layer such as a joining layer formed of a conductive material may be provided between the counter electrode current collector 21 and the counter electrode active material layer 22. Moreover, the counter electrode layer 20 may not include the counter electrode current collector 21 and, for example, the counter electrode terminal 90 and the like may function as a current collector of the counter electrode active material layer 22. That is, the counter electrode layer 20 may include only the counter electrode active material layer 22 out of the counter electrode current collector 21 and the counter electrode active material layer 22.

In the present disclosure, for example, one of the electrode layer 10 and the counter electrode layer 20 is a positive electrode layer including a positive electrode active material layer and a positive electrode current collector as the electrode active material layer 12 and the electrode current collector 11, and the other is a negative electrode layer including a negative electrode active material layer and a negative electrode current collector as the counter electrode active material layer 22 and the counter electrode current collector 21. Hereinafter, the positive electrode active material layer and the negative electrode active material layer may be simply referred to as an "active material layer", collectively. Additionally, the positive electrode current collector and the negative electrode current collector may be simply referred to as a "current collector", collectively.

The material of the current collector is not particularly limited as long as the current collector is formed of a material having conductivity. For the current collector, for example, a foil-like body, a plate-like body, a web-like body, or the like consisting of stainless, nickel, aluminum, iron, titanium, copper, palladium, gold and platinum, or an alloy of two or more of the above may be used. The material of the current collector may be appropriately selected taking into consideration no occurrence of melting and decomposition in a manufacturing process and at an operation temperature and an operation pressure, and a battery operation potential and conductivity relating to the current collector. Additionally, the material of the current collector can be selected also in accordance with a required tensile strength and heat resistance. The current collector may be a high-strength electrolytic copper foil or a clad material in which different metal foils are laminated, for example.

The thickness of the current collector is, for example, within a range from 10 µm or greater and 100 µm or smaller; however, the thickness smaller than 10 µm may be set as long as handling in the manufacturing process, the characteristic aspect such as a current amount, and the reliability are satisfied.

The positive electrode active material layer at least includes a positive electrode active material. The positive electrode active material layer is a layer mainly formed of a positive electrode material such as the positive electrode active material. The positive electrode active material is a substance in which a metal ion such as a lithium (Li) ion or a magnesium (Mg) ion is inserted into or detached from a crystal structure at a potential higher than that of the negative electrode and oxidation or reduction is performed accordingly. The type of the positive electrode active material can be selected appropriately in accordance with the type of the battery, and a widely known positive electrode active material can be used.

The positive electrode active material may include a compound containing lithium and a transition metal element and, more specifically, oxide containing lithium and a transition metal element, a phosphate compound containing lithium and a transition metal element, and the like may be included. As the oxide containing lithium and a transition metal element, for example, lithium nickel composite oxide such as LiNiₓM₁₋ₓO₂ (where M is at least one element selected from the group consisting of Co, Al, Mn, V, Cr, Mg, Ca, Ti, Zr, Nb, Mo, and W, and x is 0 < x ≤ 1), layered oxide such as lithium cobalt oxide (LiCoO₂), lithium nickel oxide (LiNiO₂), and lithium manganese oxide (LiMn₂O₄), lithium manganese oxide having a spinel structure (LiMn₂O₄, Li₂MnO₃, LiMnO₂), and the like are used. As the phosphate compound containing lithium and a transition metal element, for example, lithium iron phosphate having an olivine structure (LiFePO₄), and the like are used. Additionally, sulfide such as sulfur (S) and lithium sulfide (Li₂S) can also be used for the positive electrode active material, and in this case, positive electrode active material particles with coating or addition of a lithium niobate (LiNbO₃) can be used as the positive electrode active material. Note that, for the positive electrode active material, only one of those materials may be used, or a combination of two or more of those materials may be used.

As described above, the positive electrode active material layer may at least include the positive electrode active material. The positive electrode active material layer may be a compound agent layer formed of a compound agent of the positive electrode active material and another additive material. As the other additive material, for example, a solid electrolyte such as an inorganic-based solid electrolyte or a sulfide-based solid electrolyte, a conduction aid such as acetylene black, a binder for binding such as polyethylene oxide or polyvinylidene fluoride, and the like may be used. In the positive electrode active material layer, with the positive electrode active material and the other additive material such as the solid electrolyte mixed at a predetermined ratio, the lithium-ion conductivity in the positive electrode active material layer can be improved, and also the electronic conductivity can be improved. As the solid electrolyte, for example, a solid electrolyte that is exemplified as a later-described solid electrolyte of the solid electrolyte layer 30 can be used.

Note that, the thickness of the positive electrode active material layer is 5 µm or greater and 300 µm or smaller, for example.

The negative electrode active material layer at least includes a negative electrode active material. The negative electrode active material layer is a layer mainly formed of a negative electrode material such as the negative electrode active material. The negative electrode active material indicates a substance in which a metal ion such as a lithium (Li) ion or magnesium (Mg) ion is inserted into or detached from a crystal structure at a potential lower than that of the positive electrode and oxidation or reduction is performed accordingly. The type of the negative electrode active material can be selected appropriately in accordance with the type of the battery, and a widely known negative electrode active material can be used.

For the negative electrode active material, for example, a carbon material such as natural graphite, artificial graphite, carbon graphite fiber, or resin heat treatment carbon, or an alloy-based material that is formed into a compound agent with the solid electrolyte can be used. As the alloy-based material, for example, a lithium alloy such as LiAl, LiZn, Li₃Bi, Li₃Cd, Li₃Sb, Li₄Si, Li_{4.4}Pb, Li_{4.4}Sn, Li_{0.17}C, and LiCe, oxide of lithium and a transition metal element such as lithium titanate (Li₄Ti₅O₁₂), metal oxide such as zinc oxide (ZnO) and silicon oxide (SiOₓ), and the like can be used. Note that, for the negative electrode active material, only one of those materials may be used, or a combination of two or more of those materials may be used.

As described above, the negative electrode active material layer may include at least the negative electrode active material. The negative electrode active material layer may be a compound agent layer formed of a compound agent of the negative electrode active material and another additive material. As the other additive material, for example, a solid electrolyte such as an inorganic-based solid electrolyte or a sulfide-based solid electrolyte, a conduction aid such as acetylene black, a binder for binding such as polyethylene oxide or polyvinylidene fluoride, and the like may be used. In the negative electrode active material layer, with the negative electrode active material and the other additive material such as the solid electrolyte mixed at a predetermined ratio, the lithium-ion conductivity in the negative electrode active material layer can be improved, and also the electronic conductivity can be improved. As the solid electrolyte, for example, a solid electrolyte that is exemplified as the later-described solid electrolyte of the solid electrolyte layer 30 can be used.

Note that, the thickness of the negative electrode active material layer is 5 µm or greater and 300 µm or smaller, for example.

The solid electrolyte layer 30 is arranged between the electrode active material layer 12 and the counter electrode active material layer 22 and is in contact with the electrode active material layer 12 and the counter electrode active material layer 22.

The solid electrolyte layer 30 at least includes the solid electrolyte. The solid electrolyte layer 30 includes the solid electrolyte as a main component, for example. The solid electrolyte may be a widely known solid electrolyte for a battery that does not have the electronic conductivity but the ion conductivity. For the solid electrolyte, for example, a solid electrolyte that conducts a metal ion such as a lithium ion or a magnesium ion can be used. The type of the solid electrolyte may be appropriately selected in accordance with the conducted ion type. For the solid electrolyte, for example, an inorganic-based solid electrolyte such as a sulfide-based solid electrolyte or an oxide-based solid electrolyte can be used. As the sulfide-based solid electrolyte, for example, lithium-containing sulfide of Li₂S-P₂S₅-based, Li₂S-SiS₂-based, Li₂S-B₂S₃-based, Li₂S-GeS₂-based, Li₂S-SiS₂-LiI-based, Li₂S-SiS₂-Li₃PO₄-based, Li₂S-Ge2S₂-based, Li₂S-GeS₂-P₂S₅-based, Li₂S-GeS₂-ZnS-based, and the like can be used. As the oxide-based solid electrolyte, for example, lithium-containing metal oxide such as Li₂O-SiO₂ and Li₂O-SiO₂-P₂O₅, lithium-containing metal nitride such as LiₓP_{y}O_{1-z}N_{z}, lithium phosphate (Li₃PO₄), and lithium-containing transition metal oxide such as lithium titanium oxide can be used. As the solid electrolyte, only one of those materials may be used, or a combination of two or more of those materials may be used.

Note that, the solid electrolyte layer 30 may contain a binder for binding such as polyethylene oxide or polyvinylidene fluoride in addition to the above-described solid electrolyte.

The thickness of the solid electrolyte layer 30 is 5 µm or greater and 150 µm or smaller, for example.

Note that, the material of the solid electrolyte may be formed of an aggregate of particles. Additionally, the material of the solid electrolyte may be formed of a sintered structure.

As described above, the battery 100 includes the first insulation film 70, the electrode terminal 80, and the counter electrode terminal 90. In the example illustrated in Fig. 1, two pairs of the first insulation film 70 and the electrode terminal 80 are provided along two facing sides, that is, the first side surface 6 and the second side surface 7 of the power generation element 1 in plan view. The first insulation films 70 cover the first side surface 6 and the second side surface 7 that are two side surfaces on the sides of short sides in plan view of the power generation element 1. That is, out of the two first insulation films 70, one covers the first side surface 6, and the other covers the second side surface 7. The two electrode terminals 80 are in contact with the two respective first insulation films 70 arranged to face each other. Thus, since the first side surface 6 and the second side surface 7 being two ends of the power generation element 1 in plan view are covered with the first insulation films 70, the layers in the power generation element 1 can be bound from the two ends in plan view, and delamination of the layers can be suppressed effectively.

Out of the two first insulation films 70 and the two electrode terminals 80, the first insulation film 70 and the electrode terminal 80 that are provided along the first side surface 6 are mainly described below. The first insulation film 70 and the electrode terminal 80 provided along the second side surface 7 have the same configuration as that of the first insulation film 70 and the electrode terminal 80 provided along the first side surface 6, and similar descriptions are applied to the configuration, for example.

Note that, in a case where the power generation element 1 includes four side surfaces like the battery 100, the first insulation film 70 may cover at least one side surface. For example, the first insulation film 70 may cover adjacent surfaces instead of facing surfaces out of the side surfaces of the power generation element 1. Additionally, the first insulation film 70 may cover all the side surfaces of the power generation element 1, for example. Moreover, the number of the first insulation films 70 is not particularly limited, and as long as the side surface of the power generation element 1 is covered with one or more first insulation films 70, any number of the first insulation films 70 may be applied.

The first insulation film 70 includes a first side surface covering portion 71 that covers the side surface of the power generation element 1 and the first main surface covering portion 72 that covers the counter electrode main surface 3. In the present embodiment, the first insulation film 70 does not cover the electrode main surface 2. With this, the electrode terminal 80 is easily connected to the electrode layer 10. Note that, the first insulation film 70 may cover a part of the electrode main surface 2.

The first side surface covering portion 71 covers the first side surface 6 in contact with the first side surface 6 and is joined to the first side surface 6, for example. The first side surface covering portion 71 continuously covers from an end on an electrode main surface 2 side of the first side surface 6 to an end on a counter electrode main surface 3 side, for example. In the example illustrated in Fig. 1, the first side surface covering portion 71 covers the entire surface of the first side surface 6. Additionally, the first side surface covering portion 71 covers also a part of a side surface on the side of long side of the power generation element 1 in plan view (that is, an XZ plane in the power generation element 1), which is a surface adjacent to the first side surface 6. Note that, the first side surface covering portion 71 may cover the entirety of the side surface on the side of long side of the power generation element 1 in plan view. Moreover, the first side surface covering portion 71 may cover a part of the electrode main surface 2.

The first main surface covering portion 72 is in contact with the counter electrode main surface 3 and is joined to the counter electrode main surface 3, for example. The first main surface covering portion 72 covers the end portion of the counter electrode main surface 3. The first main surface covering portion 72 covers the surface of the counter electrode current collector 21, for example.

The first side surface covering portion 71 and the first main surface covering portion 72 are continuous and are connected to each other. That is, the first insulation film 70 is routed around from the first side surface 6 onto the counter electrode main surface 3 formed of the main surface of the counter electrode current collector 21 and continuously covers a ridge line between the first side surface 6 and the counter electrode main surface 3.

Thus, in the present embodiment, the first insulation film 70 continuously covers also a part of the side surface end portion on the side of long side of the power generation element 1 in plan view from a corner and the ridge line positioned at the end portion of each of the first side surface 6 and the second side surface 7 of the power generation element 1. With such first insulation film 70 configuration in which the corner portion and the ridge line portion are covered, the operational effect that the corner portion of the power generation element 1 that is likely to be delaminated is fixed while protecting the power generation element 1 more firmly is also obtained, and the reliability of the battery 100 is further enhanced.

The first insulation film 70 may be an electric insulation body. The first insulation film 70 contains resin, for example. The first insulation film 70 contains resin with the insulation properties as a main component, for example. The resin may include epoxy-based resin, acryl-based resin, polyimide-based resin, silsesquioxane, and the like, for example. Specifically, the first insulation film 70 contains applicable thermosetting resin such as thermosetting epoxy-based resin of liquid base or powder base, for example. With such applicable thermosetting resin in the form of liquid or the form of powder being applied to the side surface and the main surface of the power generation element 1 and thermally cured, the side surface and the main surface of the power generation element 1 can be covered with the first insulation film 70 and can be joined and fixed to each other. Additionally, the first insulation film 70 may have a lamination structure of multiple insulation layers formed of the same material or different materials.

The first insulation film 70 may be made of a material more flexible than the configuration members of the power generation element 1 (for example, the current collector, the active material, and the solid electrolyte). The Young's modulus of the first insulation film 70 is 10 GPa or greater and 40 GPa or smaller, for example. Specifically, for the first insulation film 70, epoxy-based resin of such a range of the Young's modulus can be used. With this, impact on a portion covered with the first insulation film 70 can be absorbed, and the battery 100 can be protected. Additionally, even under the cooling/heating cycle environment, the proportionally flexible first insulation film 70 absorbs stress acting on an interface between the first insulation film 70 and the side surface and the like of the power generation element 1, the stress being caused by the mutual differences of the thermal expansion coefficient between the first insulation film 70 and the power generation element 1. Therefore, a negative effect on the structure of the constituents of the battery 100 such as occurrence of a crack or delamination can be suppressed.

Note that, for the flexibility of the configuration material of the power generation element 1 and the first insulation film 70 (for example, elasticity such as the Young's modulus), the interrelationship of the flexibility between the configuration material of the power generation element 1 and the first insulation film 70 can be compared based on a comparison of the magnitude relationship between traces obtained by pressing a rigid body indenter as with measurement of Vickers hardness. For example, when the indenter is pressed onto each portion of a cross section of the power generation element 1 with the same force, if the first insulation film 70 is in a state of being concaved at the greatest degree compared with the configuration material of the power generation element 1, it can be determined that the first insulation film 70 is more flexible than the configuration material of the power generation element 1.

Additionally, from the perspective of relaxation of stress on the power generation element 1 generated by expansion or contraction due to a temperature change, relaxation of heat stress, the reliability of joining with a side wall, and the like, a material including various resin materials more flexible than the current collector may be used for the first insulation film 70.

For example, the Young's modulus of the first insulation film 70 is lower than the Young's modulus of metal forming the electrode current collector 11 and the counter electrode current collector 21. With this, the stress on the power generation element 1 that is generated by a temperature change in the current collector is relaxed by deformation of the first insulation film 70.

Additionally, in terms of relaxation of the stress on the power generation element 1 that is generated by expansion or contraction of the solid electrolyte layer 30 due to a temperature change and repetition of charge and discharge, and improvement of the reliability of the battery 100, the Young's modulus of the first insulation film 70 may be lower than the Young's modulus of the solid electrolyte layer 30.

Moreover, in terms of relaxation of the stress on the power generation element 1 that is generated by expansion or contraction of the electrode active material layer 12 and the counter electrode active material layer 22 due to a temperature change, and improvement of the reliability of the battery 100, the Young's modulus of the first insulation film 70 may be lower than the Young's moduli of the electrode active material layer 12 and the counter electrode active material layer 22. The mutual relationship between the Young's moduli can be compared based on the displacement characteristics to the pressure when a probe is pressed, the magnitude relationship between the concaves, or the like, for example.

The two first insulation films 70 may be formed of the same material or may be formed of materials different from each other. When the two first insulation films 70 are formed of materials different from each other, the material, the physical properties, and the like of the above-described insulation film may be satisfied by at least either of the two first insulation films 70.

The thickness of the first insulation film 70 may be even or may be uneven. In terms of the electric insulation properties, the thickness of a thin portion of the first insulation film 70 may be 10 µm or greater. Additionally, in terms of the impact absorption, the thickness of the thinnest portion of the first insulation film 70 may be 100 µm or greater. Moreover, in terms of insulation of atmospheric air and moisture, the thickness of the thinnest portion of the first insulation film 70 may be 1 mm or greater. An upper limit of the thickness of the first insulation film 70 is not particularly limited. The thickness of the first insulation film 70 may be set to an appropriate thickness that can achieve both the weight energy density and volume energy density of the battery 100 and an effect of protection and the like by the first insulation film 70. In terms of reduction in the thickness of the battery 100 that has a great effect on the volume energy density and also protection of the side surface of the power generation element 1 that is likely to be broken due to impact and the like, the thickness of the first main surface covering portion 72 may be smaller than the thickness of the first side surface covering portion 71.

The first insulation film 70 may have a lamination structure of multiple insulation layers. The lamination structure of multiple insulation layers are formed by applying and curing resin with insulation properties such as epoxy-based resin multiple times. For example, with further application and curing of the epoxy-based resin onto the epoxy-based resin that is cured once, a fine and firm first insulation film 70 in which a defect such as a hole and a thin portion due to uneven thickness is less likely to occur can be formed. With the electrode terminal 80 formed on such a first insulation film 70 in which the defect is reduced, a problem that the conductive material enters the first insulation film 70 and causes short-circuit is suppressed. Additionally, if a thick first insulation film 70 is formed by applying and curing the resin with insulation properties at one time, there is a possibility that delamination occurs due to stress during the curing. Particularly, when there are a bend portion between the first side surface covering portion 71 and the first main surface covering portion 72, contraction stress during the curing of resin acts on an end portion on the opposite side to the bend portion, and delamination in the form in which the end portion is peeled outward is likely to be caused. To deal with this, with the laminating by applying and curing a thin insulation layer multiple times repeatedly, strong curing stress is less likely to act even when the first insulation film 70 is formed thick in 100 µm, for example, and thus delamination is suppressed. With this, the first insulation film 70 with the lamination structure of multiple insulation layers can be formed while suppressing crack and delamination. As a matter of course, it is possible to achieve the formation also with a first insulation film 70 with a thickness of 1 mm. With common observation of a polished cross section by an optical microscope, a SEM (Scanning Electron Microscope), or the like, such a lamination structure of multiple insulation layers can be observed as a lamination structure that can be seen by repeating multiple times of applying and curing.

The number of the insulation layers included in the first insulation film 70 is not particularly limited and may be two or more or may be three or more.

The thickness of each of the multiple insulation layers is 30 µm or smaller, for example. In terms of forming finer first insulation film 70, the thickness of each of the multiple insulation layers may be 10 µm or smaller.

Each of the insulation layers forming the multiple insulation layers may be formed of the same material or may be formed of different materials. That is, when the insulation layer is formed multiple times, different insulation materials may be used for respective layers. For example, the insulation layers are laminated by repeating applying and curing so as to be in order from high to low curing temperature, melting point, or glass transition point of the resin with insulation properties, and thus a fine and thick first insulation film 70 can be formed without deteriorating the properties of the previously formed insulation layer by heat during the curing. In this case, the insulation layer positioned on the outer side contains resin with higher curing temperature, melting point, or glass transition point. Note that, a temperature and time for the conditions of thermal curing may be set within a range that does not negatively affect the battery characteristics.

The electrode terminal 80 is a member in the form of film that covers the first insulation film 70 from outside and is electrically connected to the electrode layer 10. In detail, the electrode terminal 80 is routed around from a surface on an outer side of the first insulation film 70 to the electrode main surface 2 formed of the main surface of the electrode current collector 11 and continuously covers the first insulation film 70 and at least a part of the electrode main surface 2. The electrode terminal 80 covers an end portion of the power generation element 1 from the two sides in the lamination direction and the outside of the power generation element 1. The electrode terminal 80 is not in contact with the side surface of the power generation element 1 and the counter electrode main surface 3. The electrode terminal 80 may be in contact with the side surface of the power generation element 1 as long as not being in contact with the counter electrode layer 20. Note that, although the two electrode terminals 80 are provided along the first side surface 6 and the second side surface 7, only one of the two electrode terminals 80 may be provided. That is, one of the first side surface 6 and the second side surface 7 may be covered with only the first insulation film 70 out of the first insulation film 70 and the electrode terminal 80.

The electrode terminal 80 includes a second side surface covering portion 81 that covers the first side surface covering portion 71 of the first insulation film 70, an electrode contact portion 82 that is joined with the electrode main surface 2, and a second main surface covering portion 83 that covers the first main surface covering portion 72 of the first insulation film 70. The second side surface covering portion 81, the electrode contact portion 82, and the second main surface covering portion 83 are continuous and are connected with each other.

The second side surface covering portion 81 covers a surface on the outer side of the first insulation film 70, in other words, on the opposite side to a power generation element 1 side of the first insulation film 70. The second side surface covering portion 81 is in contact with the surface on the outer side of the first insulation film 70 and is joined to the first insulation film 70, for example. The second side surface covering portion 81 covers the first side surface covering portion 71. Specifically, the second side surface covering portion 81 covers the first side surface covering portion 71 of the first insulation film 70 from outside and is in contact with the first side surface covering portion 71.

The electrode contact portion 82 covers at least a part of the electrode main surface 2 and is joined to the electrode main surface 2. The electrode contact portion 82 is electrically connected to the electrode current collector 11, for example. The electrode contact portion 82 is in contact with the end portions of the electrode main surface 2. With this, since the electrode contact portion 82 is in contact with the end portion on an electrode terminal 80 side of the electrode main surface 2, the electrode terminal 80 does not need to be routed greatly around an inner side of the electrode main surface 2, and the electrode terminal 80 and the electrode layer 10 can be electrically connected to each other easily. In plan view, the end portion on the inner side of the second main surface covering portion 83 and the end portion on the inner side of the portion in which the electrode contact portion 82 covers the electrode main surface 2 are in the same position, for example.

The second main surface covering portion 83 covers the first main surface covering portion 72 from outside (that is, the opposite side to a counter electrode main surface 3 side of the first main surface covering portion 72) and is in contact with the first main surface covering portion 72. That is, the second side surface covering portion 81 and the second main surface covering portion 83 are routed around from an outside surface of the first side surface covering portion 71 to an outside surface of the first main surface covering portion 72 in the first insulation film 70 and cover the first insulation film 70. In plan view, the end portion on the inner side of the second main surface covering portion 83 is positioned on the outer side of the end portion on the inner side of the first main surface covering portion 72. Thus, with the second main surface covering portion 83 covering the first main surface covering portion 72, a structure in which the electrode terminal 80 sandwiches the end portion of the power generation element 1 from the lamination direction is obtained, and delamination of the layers of the power generation element 1 can be suppressed. Additionally, both the electrode terminal 80 and counter electrode terminal 90 can be joined with the substrate and the like on the counter electrode main surface 3 side of the power generation element 1. Note that, the electrode terminal 80 may not include the second main surface covering portion 83.

Additionally, the thickness of the electrode terminal 80 is not particularly limited. In terms of the volume energy density of the battery 100, the thickness of the electrode terminal 80, particularly, the thickness of the electrode contact portion 82 may be thinner than the thickness of the current collector. The thickness of the electrode terminal 80, particularly, the thickness of the electrode contact portion 82 is 1 µm or greater and 50 µm or smaller, and may be 2 µm or greater and 40 µm or smaller, for example. With the thickness of the electrode terminal 80 within the above-described range, the stress generated by expansion or contraction of the current collector due to a temperature change is likely to be relaxed while suppressing a reduction in the volume energy density, and the characteristics of the battery 100 can be obtained stably.

Moreover, in a case where a surface on a side in a direction from the electrode main surface 2 toward the counter electrode main surface 3 is a lower surface, the distance from the counter electrode main surface 3 to the lower surface of the electrode terminal 80 is the same as the distance from the counter electrode main surface 3 to the lower surface of the second main surface covering portion 83, for example.

The counter electrode terminal 90 is a member in the form of pad, or plate in other words, which is joined to the counter electrode main surface 3 and is electrically connected to the counter electrode layer 20. With this, the counter electrode terminal 90 and the counter electrode main surface 3 are joined with each other in a wide area, and thus even in a case where the battery 100 is mounted on the substrate, the battery 100 is joined rigidly. Additionally, the resistance in the counter electrode terminal 90 that is a conductive route in a case of joining with the substrate is decreased, and local heating is reduced. In the example illustrated in Fig. 1, one main surface of the counter electrode terminal 90 is in contact with the counter electrode main surface 3 formed of the surface of the counter electrode current collector 21. The counter electrode terminal 90 is arranged to face the counter electrode layer 20 and is laminated on the counter electrode main surface 3 of the counter electrode layer 20. In plan view, the entirety of the counter electrode terminal 90 is positioned inside an outer periphery of the counter electrode main surface 3 and is overlapped with the counter electrode main surface 3. That is, in plan view, the entirety of the counter electrode terminal 90 is overlapped with the counter electrode current collector 21. With this, the counter electrode terminal 90 has a structure in which the counter electrode terminal 90 does not protrude from the counter electrode main surface 3 in plan view, and thus the battery 100 can be made much smaller.

Moreover, in plan view, the counter electrode terminal 90 is positioned in the central portion of the counter electrode main surface 3, for example. The central portion of the counter electrode main surface 3 is a region on an inner side from the outer periphery of the counter electrode main surface 3 by 5% or more of a distance between facing sides of the counter electrode main surface 3, for example. The central portion of the counter electrode main surface 3 may be a region on an inner side from the outer periphery of the counter electrode main surface 3 by 10% or more of a distance between the facing sides of the counter electrode main surface 3. Additionally, in the example illustrated in Fig. 1, in plan view, the center of the counter electrode terminal 90 and the center of the counter electrode main surface 3 coincide with each other.

The counter electrode terminal 90 is circular in plan view; however, it is not particularly limited, and the shape may be other than circular such as rectangular, oval, polygonal, or the like. The thickness of the counter electrode terminal 90 is not particularly limited as long as there is no problem in use. The thickness of the counter electrode terminal 90 is greater than or equal to 1 µm and smaller than or equal to 50 µm, for example, and the thickness of the counter electrode terminal 90 may be greater than or equal to 2 µm and smaller than or equal to 40 µm. With the thickness of the counter electrode terminal 90 being within the above-described range, stress generated by expansion or contraction of the current collector due to a temperature change is relaxed easily while suppressing decrease in the volume energy density, and the characteristic of the battery 100 can be obtained stably.

Furthermore, the size of the counter electrode terminal 90 in plan view is not particularly limited; however, in terms of increasing the joining area between the battery 100 and the substrate when the battery 100 is mounted on the substrate, the size is greater than or equal to 5% of the area of the counter electrode main surface 3, for example, or may be greater than or equal to 10%.

With the counter electrode terminal 90 being provided, an electrode layer 10 side and a counter electrode layer 20 side in the power generation element 1 can be determined easily from the exterior visually or by an automatic instrument, for example.

Note that, for easy solder-mounting on the substrate, the electrode terminal 80 and the counter electrode terminal 90 may be covered with a solder layer formed of a solder plating film and the like; the details are described later.

Hereinafter, the electrode terminal 80 and the counter electrode terminal 90 may be simply referred to as a "terminal", collectively.

The terminal is formed of a conductive material having electronic conductivity. In terms of relaxation of the stress on the power generation element 1 that is generated by expansion or contraction of the layers of the power generation element 1 due to a temperature change, the terminal is formed of a conductive resin material containing resin, for example. Additionally, in a case of forming the solder plating film on the terminal, for example, a relatively hard nickel plating foundation film that is used as an foundation film is likely to have a crack due to a stress difference in the hot-cold cycle between the nickel plating foundation film and the terminal in contact with the nickel foundation film; however, if the nickel plating foundation film is formed on the terminal that is a soft impact resistance material like the conductive material containing resin, a crack is suppressed, and thus the thermal durability is improved.

For example, the Young's modulus of the terminal is lower than the Young's modulus of the metal forming the electrode current collector 11 and the counter electrode current collector 21. With this, the stress on the terminal generated by a temperature change is relaxed by deformation of the terminal itself. In the electrode terminal 80, the stress on the electrode terminal 80 is also relaxed by deformation of first insulation film 70 under the electrode terminal 80. Since the terminal can be deformed with the insulation film, it is possible to follow deformation of the power generation element 1 that occurs due to thermal shock and the charge and discharge cycle, and delamination and damage in the power generation element 1 can be suppressed. Additionally, in terms of relaxation of the stress on the power generation element 1 and improvement of the reliability of the battery 100, the Young's modulus of the terminal may be lower than the Young's modulus of the solid electrolyte layer 30. Moreover, in terms of relaxation of the stress on the power generation element 1 that is generated by expansion or contraction of the electrode active material layer 12 and the counter electrode active material layer 22 due to a temperature change, and improvement of the reliability of the battery 100, the Young's modulus of the terminal may be lower than the Young's moduli of the electrode active material layer 12 and the counter electrode active material layer 22. The mutual relationship between the Young's moduli can be compared based on the displacement characteristics to the pressure when a probe is pressed, the magnitude relationship between the concaves, or the like, for example.

Additionally, the conductive material forming the terminal contains at least one selected from the group consisting of silver, copper, nickel, zinc, aluminum, palladium, gold, platinum, and an alloy of combination of those metals, for example.

Moreover, the terminal may be formed of a material in which a solid electrolyte contains conductive particles or particles of a semiconductor material. With this, as described above, resistance components can be reduced while relaxing the stress generated by expansion or contraction of the current collector due to a temperature change, and thus a high-capacity battery with a small loss can be implemented.

Additionally, in terms of the adjustability of the thermal expansion coefficient and the flexibility (the Young's modulus), the terminal may be formed of a material in which a conductive resin paste contains a solid electrolyte and the like.

The resin contained in the conductive material forming the terminal may be thermoplastic resin or may be thermosetting resin. Among those, in terms of easy formation of the terminal, the terminal may contain thermosetting resin.

Here, when both the electrode terminal 80 and the first insulation film 70 contain resin, a processing temperature of the resin contained in the electrode terminal 80 is lower than a processing temperature of the resin contained in the first insulation film 70, for example. In a case of the thermosetting resin, the processing temperature is a curing temperature for accelerating thermal curing of the resin, for example. In a case of the thermoplastic resin, the processing temperature is a phase transition temperature for flux of the resin (for example, a glass transition point or a melting point), for example. When the first insulation film 70 contains first thermosetting resin and the electrode terminal 80 contains second thermosetting resin, a curing temperature of the first thermosetting resin is equal to or higher than a curing temperature of the second thermosetting resin, for example. With this, the curing temperature in the formation of the electrode terminal 80 can be equal to or lower than the curing temperature of the first thermosetting resin contained in the first insulation film 70. Therefore, the electrode terminal 80 can be formed while reduction in the characteristics of the first insulation film 70 can be suppressed and occurrence of delamination and cracking of the first insulation film 70 can also be suppressed.

The thermoplastic resin may include polyethylene-based resin, polypropylene-based resin, acryl-based resin, polystyrene-based resin, vinyl chloride-based resin, silicone-based resin, polyamide-based resin, polyimide-based resin, fluorinated hydrocarbon-based resin, polyether-based resin, butadiene rubber, isoprene rubber, styrene-butadiene rubber (SBR), a styrene-butadiene-styrene copolymer (SBS), a styrene-ethylene-butadiene-styrene copolymer (SEBS), ethylene-propylene rubber, butyl rubber, chloroprene rubber, acrylonitrile-butadiene rubber, and the like, for example.

The thermosetting resin may include (i) amino-based resin such as urea-based resin, melamine-based resin, and guanamine-based resin, (ii) epoxy-based resin such as bisphenol A type, bisphenol F type, phenol novolac type, and alicyclic, (iii) oxetane-based resin, (iv) phenol-based resin such as resol type and novolac type, (v) silicone-modified organic resin such as silicone epoxy and silicone polyester, and the like, for example.

Specifically, the terminal may be a material in which conductor paste containing conductor particles of silver and the like and resin is applied and formed by a metal mask or screen printing and cured. Alternatively, the conductor paste may contain low-melting-point metal, and an alloy layer may be formed on an interface between the conductor paste and the current collector and integrally fixed by thermal curing treatment. With this, a terminal with strong sticking properties is formed. As the low-melting-point metal, for example, powder of tin, tin-zinc alloy, tin-silver alloy, tin-copper alloy, tin-aluminum alloy, tin-lead alloy, indium, indium-silver alloy, indium-zinc alloy, indium-tin alloy, bismuth, bismuth-silver alloy, bismuth-nickel alloy, bismuth-tin alloy, bismuth-zinc alloy, bismuth-lead alloy, or the like is used. The type of the low-melting-point metal is selected by taking into consideration the heat resistance of the configuration member in the battery 100. Particularly, when the low-melting-point metal crushed into smaller than or equal to 10 µm is used, sintering advances even with curing treatment at a temperature around half the melting point, and the strong sticking properties between the terminal and the current collector are obtained. Additionally, the terminal may have a configuration in which a conductor has the plate shape of stainless, copper, nickel, or the like is adhered with conductive adhesive, solder, or the like.

Note that, for the terminal, a material including air holes, air bubbles, or the like containing air, for example, may be used. With such a composition structure, the flexibility (for example, the Young's modulus) can be controlled in a wide range, and thus the stress on the power generation element 1 that is generated by expansion or contraction of the layers of the power generation element 1 due to a temperature change can be further relaxed.

Additionally, the terminal may contain a non-flammable material such as metal, ceramics, or a solid electrolyte. When the non-flammable material is contained in the terminal, the operational effect as a layer wall that suppresses catching of fire when the battery heats abnormally is obtained.

Moreover, the terminal may have a lamination structure of multiple conductive layers each consisting of a conductive material. The conductive material of the multiple conductive layers may be the same or may be different from each other.

The electrode terminal 80 and the counter electrode terminal 90 may be formed of the same material or may be formed of materials different from each other. When the electrode terminal 80 and the counter electrode terminal 90 are formed of materials different from each other, the material, the physical properties, and the like of the above-described terminal may be satisfied by at least either of the electrode terminal 80 and the counter electrode terminal 90.

According to the above configuration, the battery 100 having high reliability can be implemented.

When the configuration of the battery 100 according to the present embodiment and configurations of the batteries described in PTL 1 and PTL 2 are compared with each other, the following differences are found.

There is disclosed in PTL 1 an all-solid-state battery having a structure in which an insulant is used for a side wall of a power generation element and a current is extracted by a tab lead. Thus, in a case where a terminal electrode is drawn out by a lead wire like a tab lead, the terminal electrode is brought into contact with another portion of the battery due to flex, deformation of the battery from charge and discharge, and the like, and short-circuit is likely to be caused. Additionally, a burr (dust) that falls out during processing of the battery may be attached to the current collector and the like and may cause short-circuit. Moreover, it is a structure in which the exposed current collector end portion is likely to be delaminated from the active material layer. Thus, the configuration according to the related art has a problem in the reliability of the battery. Such problems become more evident along with reduction in size and multi-layering of the battery. According to the configuration of the present embodiment, a current can be extracted by using the electrode terminal 80 and the counter electrode terminal 90 from the power generation element 1 in which the layers are bound by the first insulation film 70 forming the side wall. Additionally, with the electrode terminal 80 and the counter electrode terminal 90 of the battery 100 being joined with the substrate, a battery with excellent flex resistance can be obtained. Moreover, since no lead wire is routed, the small battery 100 with high reliability in which short-circuit is suppressed is implemented.

Additionally, there is disclosed in PTL 2 an assembled battery in which multiple batteries are connected to each other by a tab lead. However, the assembled battery in PTL 2 has a structure of being connected by a lead wire and a structure in which the layers of the power generation element are exposed from the side wall. Thus, the assembled battery is likely to be deformed and damaged, and inter-layer delamination is likely to occur from the exposed side wall end portion. As a result, short-circuit is also likely to be caused.

In contrast, it is obvious that none of the above problems occur in the battery 100 according to the present embodiment. Additionally, none of PTLs 1 and 2 disclose or indicate a battery including a terminal and an insulation film and a laminated battery in which the batteries are laminated that are described in the present embodiment.

### [Modification 1]

A Modification 1 of the Embodiment 1 is described below. Note that, in the following descriptions of the Modification 1, different points from the Embodiment 1 are mainly described, and descriptions of common points are omitted or simplified. Additionally, the same applies to a Modification 2 and the following modifications described later, and in the descriptions of each modification, different points between the Embodiment 1 and the corresponding modification are mainly described, and descriptions of common points are omitted or simplified.

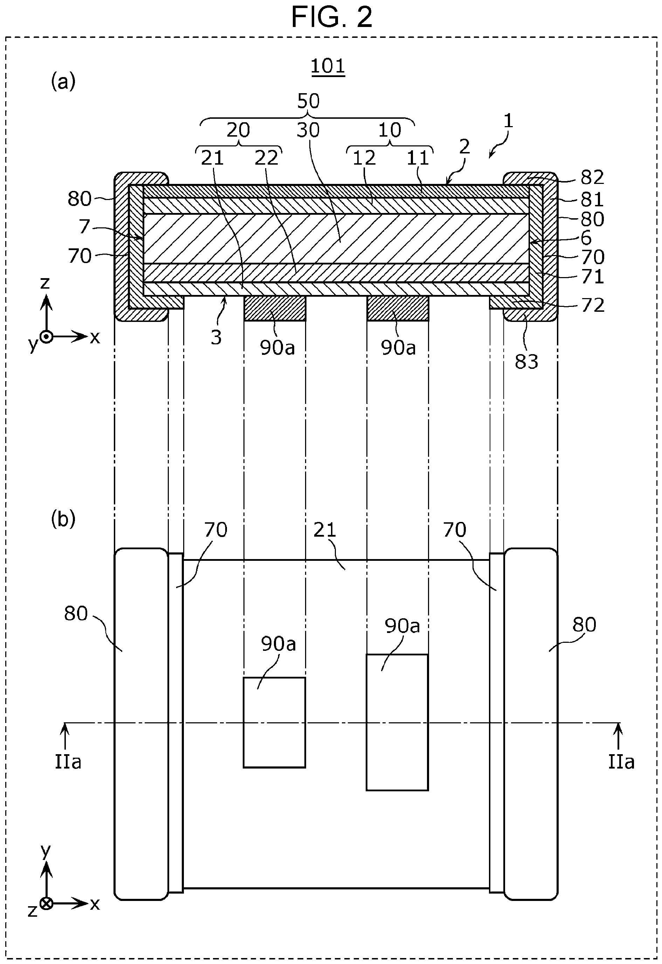

Fig. 2 is a sectional view and a plan view illustrating a schematic configuration of a battery according to the Modification 1 of the Embodiment 1. Specifically, Fig. 2(a) is a sectional view of a battery 101 according to the present modification, and Fig. 2(b) is a plan view of the battery 101 viewed from the lower side in the z-axis direction. In Fig. 2(a), a cross section in a position indicated by a IIa-IIa line in Fig. 2(b) is illustrated.

As illustrated in Fig. 2, the battery 101 according to the Modification 1 of the Embodiment 1 is different from the battery 100 in the Embodiment 1 in that the battery 101 includes two counter electrode terminals 90a that are large and small in rectangular shapes instead of the counter electrode terminal 90.

The battery 101 includes the multiple counter electrode terminals 90a. The shapes and the number of the counter electrode terminals 90a are not particularly limited. Additionally, the shapes of the multiple counter electrode terminal 90a may be the same or may be different from each other.

Thus, with the multiple counter electrode terminals 90a being formed on the counter electrode main surface 3, for the same area in plan view, the area of each counter electrode terminal 90a can be smaller than a case of forming one counter electrode terminal, and thus a problem such as a hole due to air and solvent remaining components and peel-off is less likely to occur, and printing formation of a homogeneous film is possible. Additionally, with the area of each counter electrode terminal 90a made smaller, an effect of heat is distributed, resistance to the thermal impact is enhanced, and the heat resistance is improved. Moreover, for example, in a case of the configuration illustrated in Fig. 2, with the counter electrode terminals 90a in different plan view shapes being formed on the counter electrode main surface 3, the direction of the power generation element 1 can be indicated from the exterior according to the size relationship between the two counter electrode terminals 90a.

### [Modification 2]

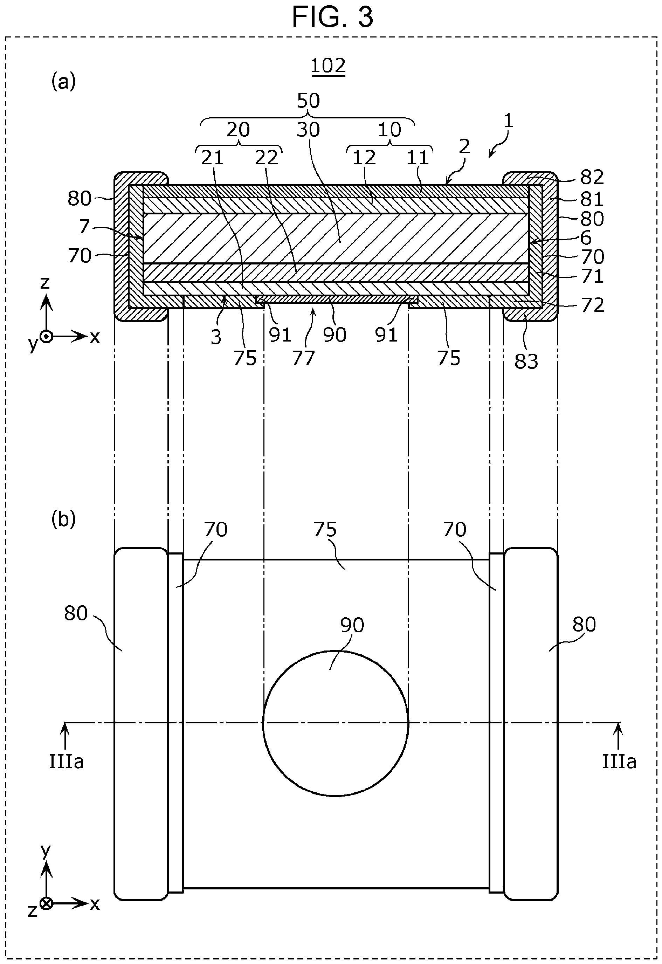

Next, a Modification 2 of the Embodiment 1 is described. Fig. 3 is a sectional view and a plan view illustrating a schematic configuration of a battery according to the Modification 2 of the Embodiment 1. Specifically, Fig. 3(a) is a sectional view of a battery 102 according to the present modification, and Fig. 3(b) is a plan view of the battery 102 viewed from the lower side in the z-axis direction. In Fig. 3(a), a cross section in a position indicated by a IIIa-IIIa line in Fig. 3(b) is illustrated.

As illustrated in Fig. 3, the battery 102 according to the Modification 2 of the Embodiment 1 is different from the battery 100 in the Embodiment 1 in that the battery 102 further includes a second insulation film 75 that covers the counter electrode main surface 3.

As described above, in addition to the constituents of the battery 100, the battery 102 includes the second insulation film 75 that covers a part of the counter electrode main surface 3. The second insulation film 75 is in contact with the counter electrode main surface 3. The second insulation film 75 is connected with the first main surface covering portion 72 of the first insulation film 70. With this, the first insulation film 70 and the second insulation film 75 form a continuous covering film, the reinforcement properties are further enhanced, and thus the flexural resistance of the battery 102 is improved. Thus, the flex resistance of the battery 102 is improved.

Additionally, the second insulation film 75 covers an outer periphery of the counter electrode terminal 90 in plan view. The second insulation film 75 is arranged so as to surround the counter electrode terminal 90 in plan view. With this, delamination of the counter electrode terminal 90 can be suppressed from the outer periphery of the counter electrode terminal 90 as a starting point. Moreover, with the second insulation film 75 being arranged around the counter electrode terminal 90, the second insulation film 75 acts also as a structure reinforcement layer, and thus the flexural resistance of the battery 102 is improved. Note that, in the example illustrated in Fig. 3, the second insulation film 75 covers the entire outer periphery of the counter electrode terminal 90 in plan view; however, only a part of the outer periphery may be covered. Additionally, the first insulation film 70 and the second insulation film 75 may be away from each other.

The second insulation film 75 covers the entire region in the counter electrode main surface 3 other than a region in which the counter electrode main surface 3 is in contact with the first main surface covering portion 72 and the counter electrode terminal 90. Additionally, in the second insulation film 75, an opening 77 is formed. The opening 77 exposes the counter electrode terminal 90 to the outer world. That is, the second insulation film 75 does not cover at least a part of the counter electrode terminal 90.

The height of the counter electrode terminal 90 from the counter electrode main surface 3 is lower than the height of the second insulation film 75 from the counter electrode main surface 3. A surface formed of the second insulation film 75 and the counter electrode terminal 90 is concaved in the portion of the counter electrode terminal 90. Additionally, in the battery 102, an outer periphery edge portion 91 of the counter electrode terminal 90 in plan view is sandwiched by the counter electrode main surface 3 and the second insulation film 75. That is, the outer periphery edge portion 91 of the counter electrode terminal 90 is covered with the second insulation film 75 and is not exposed. With a lower surface of the outer periphery edge portion 91 of the counter electrode terminal 90 being covered with the second insulation film 75, delamination of the outer periphery edge portion 91 of the counter electrode terminal 90 from the counter electrode main surface 3 is suppressed. Note that, the height of the counter electrode terminal 90 from the counter electrode main surface 3 may be the same as the height of the second insulation film 75 from the counter electrode main surface 3 or may be higher than the height of the second insulation film 75 from the counter electrode main surface 3. That is, the surface formed of the second insulation film 75 and the counter electrode terminal 90 may be a flat surface, or the portion of the counter electrode terminal 90 may be convex.

As the material of the second insulation film 75, the material described as the material of the above-described first insulation film 70 can be used, for example. The material of the second insulation film 75 may be the same as the material of the first insulation film 70 or may be different from the material of the first insulation film 70. In a case where the first insulation film 70 and the second insulation film 75 are formed of the same material, the first insulation film 70 and the second insulation film 75 may be a single insulation film integrally formed.

### [Modification 3]

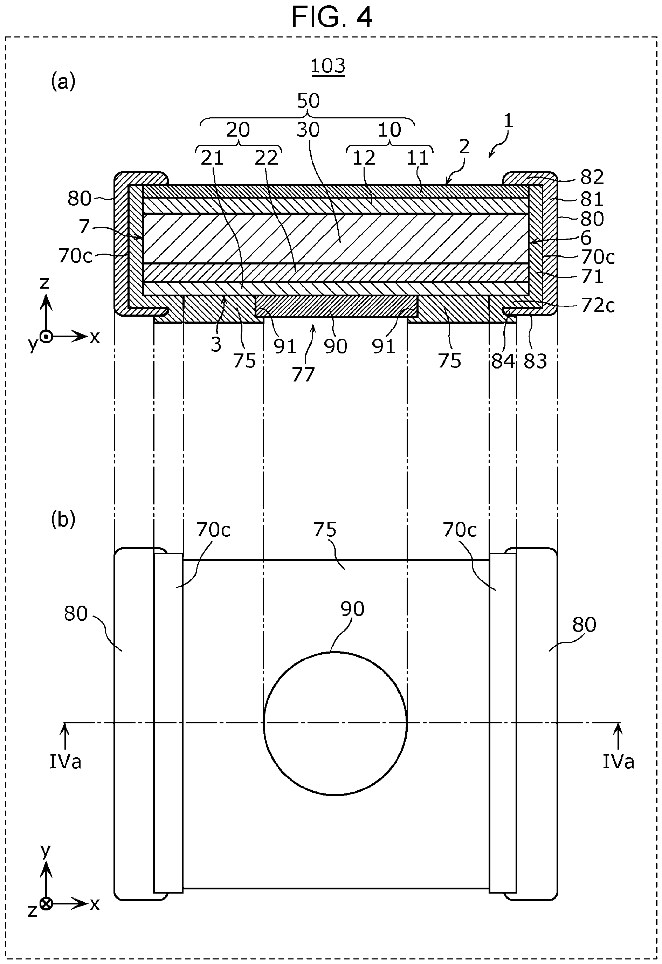

Next, a Modification 3 of the Embodiment 1 is described. Fig. 4 is a sectional view and a plan view illustrating a schematic configuration of a battery according to the Modification 3 of the Embodiment 1. Specifically, Fig. 4(a) is a sectional view of a battery 103 according to the present modification, and Fig. 4(b) is a plan view of the battery 103 viewed from the lower side in the z-axis direction. In Fig. 4(a), a cross section in a position indicated by a IVa-IVa line in Fig. 4(b) is illustrated.

As illustrated in Fig. 4, the battery 103 according to the Modification 3 of the Embodiment 1 is different from the battery 102 in the Modification 2 of the Embodiment 1 in that the battery 103 includes a first insulation film 70c instead of the first insulation film 70.

The first insulation film 70c covers an end portion 84 of the second main surface covering portion 83 in the electrode terminal 80. The first insulation film 70c includes the first side surface covering portion 71 and a first main surface covering portion 72c. The first main surface covering portion 72c covers the counter electrode main surface 3 and is also routed around to a surface on the outer side of the second main surface covering portion 83 to be in contact with the end portion 84 of the electrode terminal 80 (specifically, the second main surface covering portion 83) and cover the end portion 84. Thus, with the first insulation film 70c covering the end portion 84 of the electrode terminal 80, delamination of the electrode terminal 80 due to stress due to flex and a thermal impact and the like from solder-mounting and the like can be suppressed.

### [Modification 4]

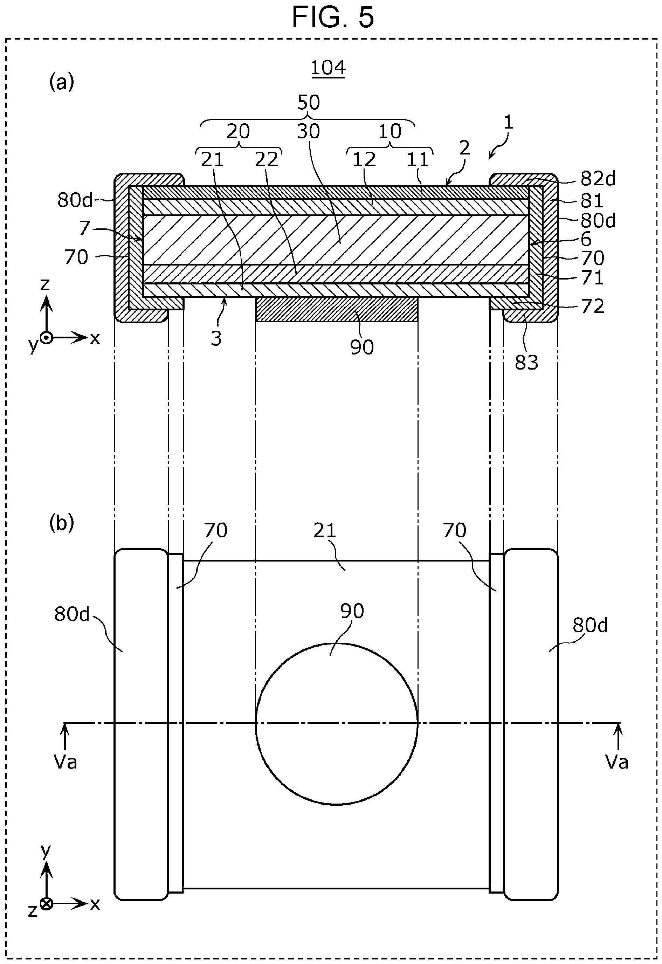

Next, a Modification 4 of the Embodiment 1 is described. Fig. 5 is a sectional view and a plan view illustrating a schematic configuration of a battery according to the Modification 4 of the Embodiment 1. Specifically, Fig. 5(a) is a sectional view of a battery 104 according to the present modification, and Fig. 5(b) is a plan view of the battery 104 viewed from the lower side in the z-axis direction. In Fig. 5(a), a cross section in a position indicated by a Va-Va line in Fig. 5(b) is illustrated.

As illustrated in Fig. 5, the battery 104 according to the Modification 4 of the Embodiment 1 is different from the battery 100 in the Embodiment 1 in that the battery 104 includes an electrode terminal 80d instead of the electrode terminal 80.

The electrode terminal 80d includes the second side surface covering portion 81, an electrode contact portion 82d, and the second main surface covering portion 83. In the battery 104, in plan view, the length of the electrode contact portion 82d from the first side surface 6 is longer than the length of the second main surface covering portion 83 from the first side surface 6. With this, the joining area between the electrode terminal 80d and the electrode main surface 2 can be increased, and thus delamination of the electrode terminal 80d in the electrode contact portion 82d can be suppressed, and also a resistance to extract a current from the electrode layer 10 can be reduced.

### [Modification 5]

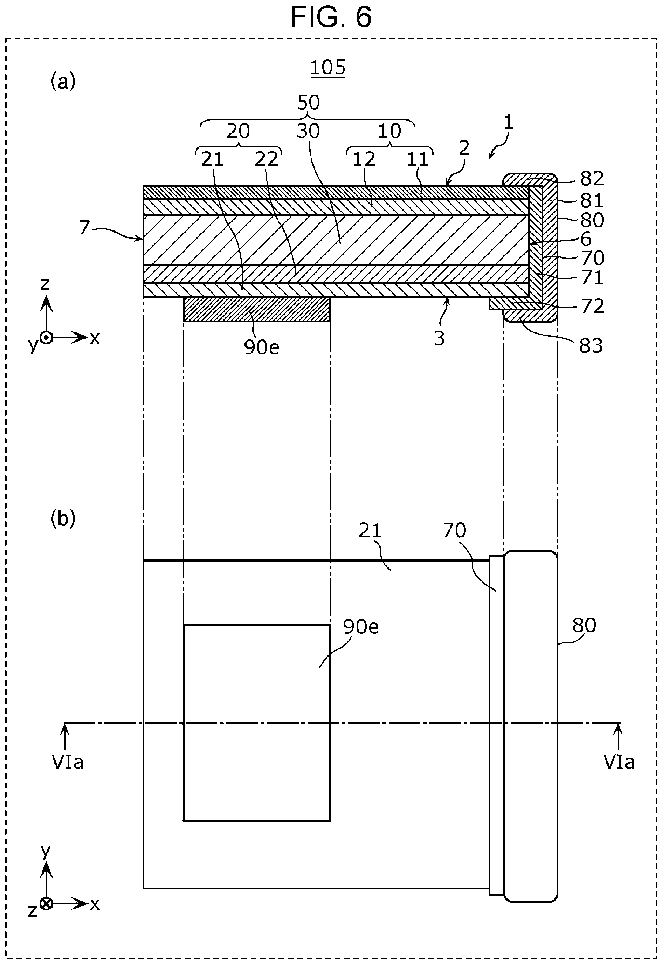

Next, a Modification 5 of the Embodiment 1 is described. Fig. 6 is a sectional view and a plan view illustrating a schematic configuration of a battery according to the Modification 5 of the Embodiment 1. Specifically, Fig. 6(a) is a sectional view of a battery 105 according to the present modification, and Fig. 6(b) is a plan view of the battery 105 viewed from the lower side in the z-axis direction. In Fig. 6(a), a cross section in a position indicated by a VIa-VIa line in Fig. 6(b) is illustrated.

As illustrated in Fig. 6, the battery 105 according to the Modification 5 of the Embodiment 1 is different from the battery 100 in the Embodiment 1 in that the first insulation film 70 and the electrode terminal 80 are not provided along both the facing two first side surface 6 and second side surface 7 but only the first side surface 6. Additionally, the battery 105 is different from the battery 100 in the Embodiment 1 in that the battery 105 includes a counter electrode terminal 90e instead of the counter electrode terminal 90.

The battery 105 includes one first insulation film 70 and one electrode terminal 80. In the battery 105, the one first insulation film 70 and the one electrode terminal 80 are provided along the first side surface 6. The second side surface 7 is not covered with the first insulation film 70 and the electrode terminal 80. With this, the battery 105 that is appropriate for a small disposition mode in which a current is extracted from only one side surface side of the power generation element 1 can be implemented.

In plan view, the distance from the second side surface 7 to the counter electrode terminal 90e is shorter than the distance from the first side surface 6 to the counter electrode terminal 90e. That is, the counter electrode terminal 90e is arranged in a position closer to the second side surface 7 on which the first insulation film 70 and the electrode terminal 80 are not provided than the first side surface 6 on which the first insulation film 70 and the electrode terminal 80 are provided. With such arrangement, in a case of mounting on the substrate, joining to the substrate is made in the electrode terminal 80 close to the first side surface 6 and in the counter electrode terminal 90e close to the second side surface 7, and thus the joining structure becomes rigid.

Note that, in the battery 105, the first insulation film 70 and the electrode terminal 80 are provided along the first side surface 6 on the side of short side of the power generation element 1 in plan view; however, the first insulation film 70 and the electrode terminal 80 may be provided along the side surface on the side of long side of the power generation element 1 in plan view.

### [Modification 6]

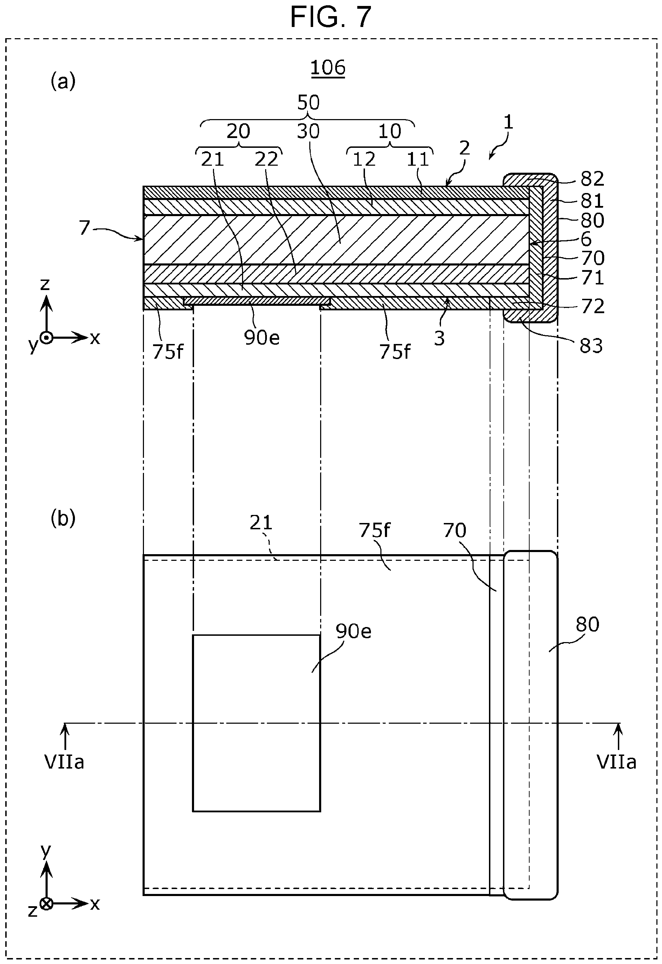

Next, a Modification 6 of the Embodiment 1 is described. Fig. 7 is a sectional view and a plan view illustrating a schematic configuration of a battery according to the Modification 6 of the Embodiment 1. Specifically, Fig. 7(a) is a sectional view of a battery 106 according to the present modification, and Fig. 7(b) is a plan view of the battery 106 viewed from the lower side in the z-axis direction. In Fig. 7(a), a cross section in a position indicated by a VIIa-VIIa line in Fig. 7(b) is illustrated.

As illustrated in Fig. 7, the battery 106 according to the Modification 6 of the Embodiment 1 is different from the battery 105 in the Modification 5 of the Embodiment 1 in that the battery 106 further includes a second insulation film 75f. Additionally, the battery 106 is different from the battery 102 in the Modification 2 of the Embodiment 1 in that the battery 106 includes the second insulation film 75f and the counter electrode terminal 90e instead of the second insulation film 75 and the counter electrode terminal 90, and the first insulation film 70 and the electrode terminal 80 are provided along not both the facing two first side surface 6 and second side surface 7 but only the first side surface 6.

The second insulation film 75f covers an outer periphery of the counter electrode terminal 90e in plan view. The second insulation film 75f is arranged so as to surround the counter electrode terminal 90e in plan view. Additionally, the second insulation film 75f covers the side surfaces on the sides of long sides in plan view of the power generation element 1.

Thus, the battery 106 has a configuration that is a combination of the battery 102 and the battery 106. Thus, delamination of the counter electrode terminal 90e is suppressed, and also the battery 106 that is appropriate for a small disposition mode in which a current is extracted from only one side surface side of the power generation element 1 can be implemented.

### [Modification 7]

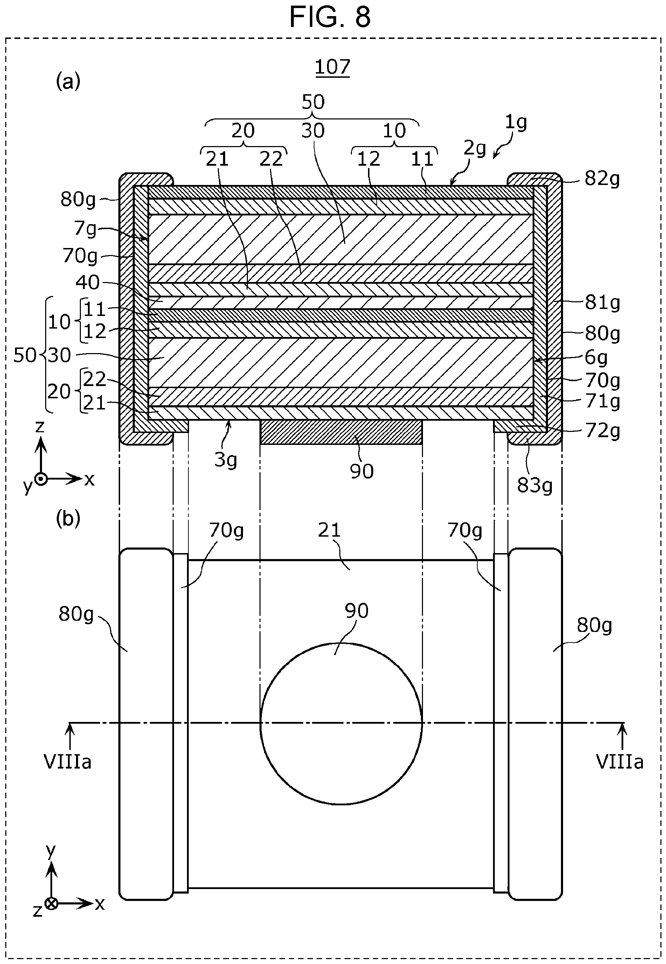

Next, a Modification 7 of the Embodiment 1 is described. Fig. 8 is a sectional view and a plan view illustrating a schematic configuration of a battery according to the Modification 7 of the Embodiment 1. Specifically, Fig. 8(a) is a sectional view of a battery 107 according to the present modification, and Fig. 8(b) is a plan view in which the battery 107 is viewed from the lower side in the z-axis direction. In Fig. 8(a), a cross section in a position indicated by a VIIIa-VIIIa line in Fig. 8(b) is illustrated.

As illustrated in Fig. 8, the battery 107 according to the Modification 7 of the Embodiment 1 is different from the battery 100 in the Embodiment 1 in that the battery 107 includes a power generation element 1g having a structure in which multiple battery cells 50 are connected in series and laminated instead of the power generation element 1. Additionally, the battery 107 is also different from the battery 100 in the Embodiment in that the battery 107 includes a first insulation film 70g and an electrode terminal 80g instead of the first insulation film 70 and the electrode terminal 80.

The power generation element 1g includes the multiple battery cells 50, specifically, two battery cells 50. The number of the battery cells 50 included in the power generation element 1g is not limited to two and may be three or more. Additionally, the power generation element 1g includes a connection layer 40 having conductivity between adjacent battery cells 50 out of the multiple battery cells 50.

The power generation element 1g includes an electrode main surface 2g that is a main surface formed of the surface of the electrode layer 10 of the uppermost battery cell 50, a counter electrode main surface 3g that is a main surface formed of the surface of the counter electrode layer 20 of the lowermost battery cell 50, and side surfaces. The side surfaces include a first side surface 6g and a second side surface 7g that are two side surfaces on the sides of short sides of the power generation element 1g in plan view.

The multiple battery cells 50 are electrically connected to each other in series and laminated. The multiple battery cells 50 are laminated such that one electrode layer 10 and the other counter electrode layer 20 of adjacent battery cells 50 out of the multiple battery cells 50 are adjacent to each other with the solid electrolyte layer 30 not arranged therebetween but the connection layer 40. In other words, the multiple battery cells 50 are laminated such that the vertical relationship between the electrode layer 10 and the counter electrode layer 20 of each battery cell 50 is the same. In the present modification, the one electrode layer 10 (specifically, the electrode current collector 11) and the other counter electrode layer 20 (specifically, the counter electrode current collector 21) of the adjacent battery cells 50 are electrically connected to each other through the connection layer 40, and thus the multiple battery cells 50 are electrically connected to each other in series and laminated. That is, the power generation element 1g includes a bipolar electrode in which the electrode layer 10 and the counter electrode layer 20 are connected to each other without the solid electrolyte layer 30.

Note that, the power generation element 1g may not include the connection layer 40, and the battery cells 50 may be laminated such that the electrode layer 10 of one of the adjacent battery cells 50 and the counter electrode layer 20 of the other one of the adjacent battery cells 50 out of the multiple battery cells 50 are adjacent to each other without the connection layer 40. For example, the electrode layer 10 of one of the adjacent battery cells 50 and the counter electrode layer 20 of the other one of the adjacent battery cells 50 may be connected electrically by being in contact with each other directly, and thus the multiple battery cells 50 may be laminated in electric connection in series. Additionally, the electrode layer 10 of one of the adjacent battery cells 50 and the counter electrode layer 20 of the other one of the adjacent battery cells 50 may share one current collector.

The connection layer 40 is formed of a conductive material having electronic conductivity, for example. The conductive material forming the connection layer 40 is not particularly limited; however, as the conductive material, the conductive material that is exemplified as the conductive material forming the above-described terminal can be used.

The first insulation film 70g includes a first side surface covering portion 71g that covers a side surface of the power generation element 1g and a first main surface covering portion 72g that covers the counter electrode main surface 3g.

The first side surface covering portion 71g is in contact with the first side surface 6g to cover the first side surface 6g and is joined to the first side surface 6g, for example. The first side surface covering portion 71g continuously covers from an end on an electrode main surface 2g side to an end on the counter electrode main surface 3g side of the first side surface 6g, for example. Thus, the first side surface covering portion 71g covers the side surfaces of the multiple battery cells 50 all at once.

The first main surface covering portion 72g is in contact with the counter electrode main surface 3g and is joined to the counter electrode main surface 3g, for example. The first main surface covering portion 72g covers an end portion of the counter electrode main surface 3g.

The first side surface covering portion 71g and the first main surface covering portion 72g are continuous and are connected with each other. That is, the first insulation film 70g is routed around from the first side surface 6g onto the counter electrode main surface 3g formed of the main surface of the counter electrode current collector 21 and continuously covers a ridge line between the first side surface 6g and the counter electrode main surface 3g.

The electrode terminal 80g includes a second side surface covering portion 81g that covers the first side surface covering portion 71g of the first insulation film 70g, an electrode contact portion 82g that is joined with the electrode main surface 2g, and a second main surface covering portion 83g that covers the first main surface covering portion 72g of the first insulation film 70g. The second side surface covering portion 81g, the electrode contact portion 82g, and the second main surface covering portion 83g are continuous and are connected with each other.

The second side surface covering portion 81g covers a surface on the outer side of the first insulation film 70g, in other words, on the opposite side to a power generation element 1g side of the first insulation film 70g. The second side surface covering portion 81g is in contact with the surface on the outer side of the first insulation film 70g and is joined to the first insulation film 70g, for example. The second side surface covering portion 81g covers the first side surface covering portion 71g.

The electrode contact portion 82g covers at least a part of the electrode main surface 2g and is joined to the electrode main surface 2g.

The second main surface covering portion 83g covers the surface on the outer side of the first insulation film 70g, in other words, on the opposite side to the power generation element 1g side of the first insulation film 70g. The second main surface covering portion 83g is in contact with the surface on the outer side of the first insulation film 70g and is joined to the first insulation film 70g, for example. The second main surface covering portion 83g covers the first main surface covering portion 72g from outside and is in contact with the first main surface covering portion 72g.

In the battery 107, the counter electrode terminal 90 is provided only on the counter electrode current collector 21 of the battery cell 50 of the lowermost layer. Note that, the counter electrode terminal 90 may be provided on the counter electrode current collector 21 of the battery cell 50 of other than the lowermost layer, and the multiple battery cells 50 may be joined through the counter electrode terminal 90, for example. Additionally, in this case, the counter electrode terminal 90 formed on the counter electrode current collector 21 can be used also as an alignment for position reference in a case where the battery cells 50 are laminated, and thus it is unnecessary to provide an alignment mark on the battery cells 50.

With such a structure in which the terminal, the first insulation film 70g, and the power generation element 1g in which the multiple battery cells 50 are laminated in connection are integral with each other, a high voltage can be obtained, and also short-circuit and delamination of the layers of the power generation element 1g can be suppressed. Thus, the battery 107 with high energy and also high reliability can be implemented. Additionally, as with the battery 100, with the electrode terminal 80g and the counter electrode terminal 90 of the battery 107 being joined to the substrate, the battery 107 with excellent flex resistance can be obtained.

### [Modification 8]

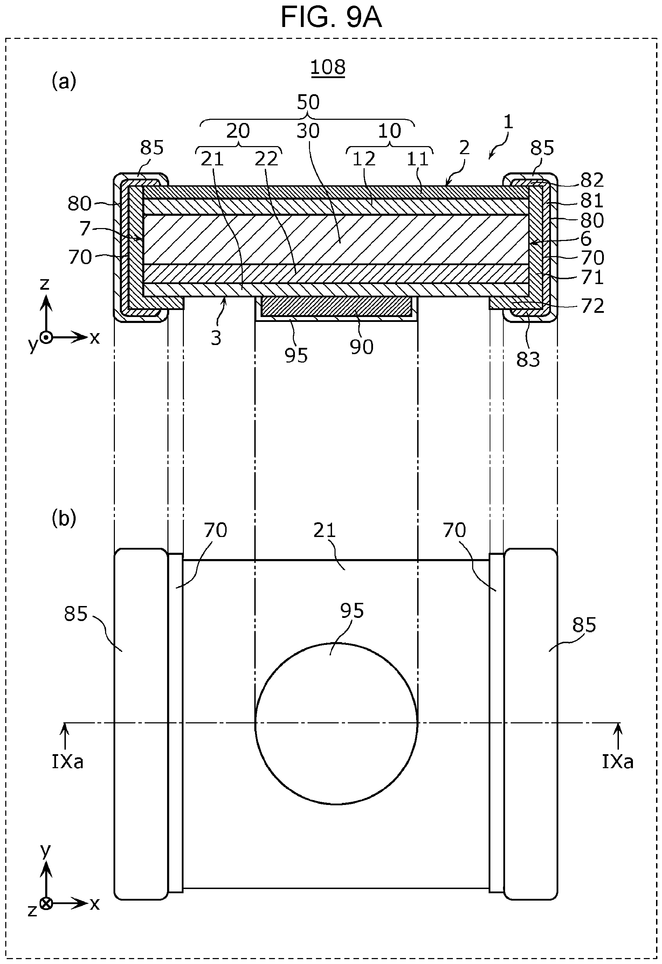

Next, a Modification 8 of the Embodiment 1 is described. Fig. 9A is a sectional view and a plan view illustrating a schematic configuration of a battery according to the Modification 8 of the Embodiment 1. Specifically, Fig. 9A(a) is a sectional view of a battery 108 according to the present modification, and Fig. 9A(b) is a plan view in which the battery 108 is viewed from the lower side in the z-axis direction. In Fig. 9A(a), a cross section in a position indicated by a IXa-IXa line in Fig. 9A(b) is illustrated.

As illustrated in Fig. 9A, the battery 108 according to the Modification 8 of the Embodiment 1 is different from the battery 100 in the Embodiment 1 in that the battery 108 further includes an electrode solder layer 85 and a counter electrode solder layer 95. Hereinafter, the electrode solder layer 85 and the counter electrode solder layer 95 may be simply referred to as a "solder layer", collectively.

The electrode solder layer 85 covers the electrode terminal 80 and is in contact with the electrode terminal 80. The electrode solder layer 85 covers a surface on an outer side of the electrode terminal 80, specifically, a surface of the electrode terminal 80 in which the electrode terminal 80 is not in contact with neither of the electrode main surface 2 and the first insulation film 70, for example. The electrode solder layer 85 may cover the entire surface on the outer side of the electrode terminal 80 or may cover a part of the surface. The electrode solder layer 85 may cover only an outer side surface of the second main surface covering portion 83, for example.

The counter electrode solder layer 95 covers the counter electrode terminal 90 and is in contact with the counter electrode terminal 90. The counter electrode solder layer 95 covers a surface on an outer side of the counter electrode terminal 90, specifically, a surface of the counter electrode terminal 90 in which the counter electrode terminal 90 is not in contact with the counter electrode main surface 3, for example. The counter electrode solder layer 95 may cover the entire surface on the outer side of the counter electrode terminal 90 or may cover a part of the surface. The counter electrode solder layer 95 may cover only a surface facing the counter electrode main surface 3 out of the surface on the outer side of the counter electrode terminal 90, for example.

Note that, as long as it has a structure not to electrically connect the electrode layer 10 and the counter electrode layer 20, the electrode solder layer 85 and the counter electrode solder layer 95 may each cover a surface other than that of the electrode terminal 80 and the counter electrode terminal 90.

The solder layer contains solder as a main component. With this, the battery 108 that can be easily solder-mounted on the substrate and the like is implemented. Additionally, in a case of using conductor paste containing silver for the terminal, the solder layer acts as a block layer, and the migration resistance is improved.

The solder layer is formed of a solder plating film in which plating treatment is performed on each terminal, for example. The thickness of the solder plating film is greater than or equal to 1 µm and smaller than or equal to 10 µm, for example. With this, occurrence of stress of film formation and a crack from a thermal impact are suppressed. Additionally, although illustration is omitted, in terms of improving the mounting performance on the substrate and the reliability, the solder plating film includes a nickel plating foundation film that is in contact with the surface of the terminal and a tin plating film that is formed on the nickel plating foundation film, for example. The nickel plating foundation film contains nickel as a main component, and the tin plating film contains tin as a main component. In terms of the mounting performance on the substrate and the reliability, the thickness of the nickel plating foundation film is greater than or equal to 1 µm and smaller than or equal to 5 µm, and the thickness of the tin plating film is greater than or equal to 0.5 µm and smaller than or equal to 5 µm, for example. Note that, the thickness of the solder plating film can be measured by a general evaluation method of thickness of plating that is, for example, cross section observation by an optical microscope or an electronic microscope or fluorescent X-ray measurement. Note that, the solder layer may not be formed of the solder plating film and may be formed of solder paste and the like, for example.

Additionally, in a case where a surface on a side of a direction from the electrode main surface 2 toward the counter electrode main surface 3 is a lower surface, the distance from the counter electrode main surface 3 to the lower surface of the electrode solder layer 85 is the same as the distance from the counter electrode main surface 3 to the lower surface of the counter electrode solder layer 95, for example.

Note that, in Fig. 9A, the configuration of the battery 100 according to the Embodiment 1 further includes the electrode solder layer 85 and the counter electrode solder layer 95; however, it is not limited thereto. The configurations of the batteries according to the Modifications 1 to 7 of the Embodiment 1 may further include the electrode solder layer 85 and the counter electrode solder layer 95.

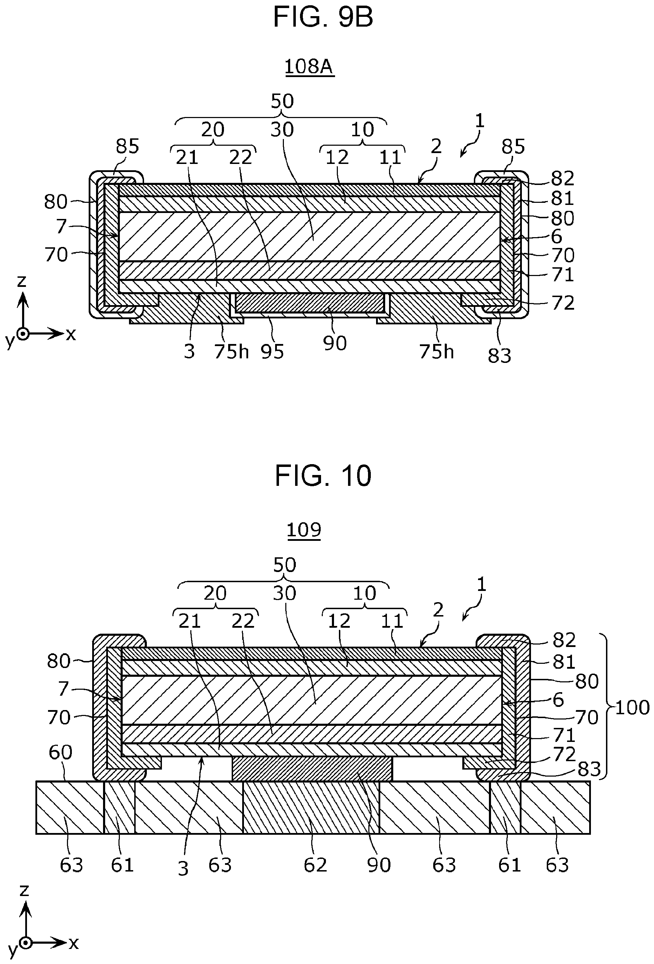

Additionally, for example, the configuration of the battery 108 may further include a second insulation film 75h. Fig. 9B is a sectional view illustrating a schematic configuration of another battery 108A according to the Modification 8 of the Embodiment 1.

As illustrated in Fig. 9B, the battery 108A includes the second insulation film 75h in addition to the above-described configuration of the battery 108.

The second insulation film 75h is in contact with the counter electrode main surface 3. The second insulation film 75h is connected with the first main surface covering portion 72 of the first insulation film 70. Additionally, the second insulation film 75h covers the outer periphery of the counter electrode terminal 90 in plan view. With this, in a case where the battery 108A is solder-mounted on the substrate by using the counter electrode solder layer 95, a crack (for example, usually, a sweeping crack from an end of the counter electrode solder layer 95) that is likely to occur in the counter electrode solder layer 95 due to rapid heating is suppressed because the solderability is limited by the second insulation film 75h covering the outer periphery of the counter electrode terminal 90. Thus, solder joining to the substrate with the excellent sticking properties, electric resistance, and thermal dissipation can be implemented.

Additionally, the second insulation film 75h covers the outer periphery and the outer periphery edge portion of the counter electrode terminal 90 in plan view through the counter electrode solder layer 95. That is, a part of the counter electrode solder layer 95 is positioned between the counter electrode terminal 90 and the second insulation film 75h and is in contact with each of the counter electrode terminal 90 and the second insulation film 75h. For example, such a structure can be formed by infiltrating plating liquid into a gap between the counter electrode terminal 90 and the second insulation film 75h by depressurization processing and the like when the solder layer is formed. With this, a suppression effect on delamination of the counter electrode terminal 90 by the second insulation film 75h is enhanced by the anchoring effect by the counter electrode solder layer 95, and the counter electrode terminal 90 joined further rigidly to the counter electrode main surface 3 can be formed.

Moreover, the second insulation film 75h covers the end portion of the electrode terminal 80 (specifically, the second main surface covering portion 83) through the electrode solder layer 85. With this, also in the electrode terminal 80, an effect similar to the effect from that the outer periphery and the outer periphery edge portion of the counter electrode terminal 90 described above are covered through the counter electrode solder layer 95 can be obtained.

### [Modification 9]

Next, a Modification 9 of the Embodiment 1 is described. Fig. 10 is a sectional view illustrating a schematic configuration of a battery according to the Modification 9 of the Embodiment 1.

As illustrated in Fig. 10, a battery 109 according to the Modification 9 of the Embodiment 1 has a configuration in which the battery 100 in the Embodiment 1 is mounted on the substrate 60. That is, the battery 109 further includes the substrate 60 in addition to the configuration of the battery 100. The battery 109 is formed by mounting the battery 100 on the substrate 60 by using solder and the like.

The substrate 60 is a mounting substrate for mounting the battery 100 including the power generation element 1. The substrate 60 is a ceramic substrate or a resin substrate, for example. The substrate 60 is arranged on the counter electrode layer 20 side of the power generation element 1 to face the counter electrode main surface 3 of the power generation element 1. The counter electrode terminal 90 is positioned between the counter electrode layer 20 and the substrate 60. The bending strength of the substrate 60 is higher than the bending strength of the battery 100, for example.

The substrate 60 includes an electrode connection portion 61, a counter electrode connection portion 62, and an insulation body layer 63.

The electrode connection portion 61 is arranged in a position overlapped with the electrode terminal 80 in plan view and penetrates the insulation body layer 63 in the thickness direction. The electrode connection portion 61 is joined with the electrode terminal 80 directly or by solder and the like (illustration is omitted) and is electrically connected with the electrode layer 10. Note that, in a case where the electrode terminal 80 does not include the second main surface covering portion 83, the electrode connection portion 61 may include a metal terminal or the like that protrudes to a power generation element 1 side of the substrate 60 to be connected with the electrode terminal 80.

The counter electrode connection portion 62 is arranged in a position overlapped with the counter electrode terminal 90 in plan view and penetrates the insulation body layer 63 in the thickness direction. The counter electrode connection portion 62 is joined with the counter electrode terminal 90 directly or by solder and the like (illustration is omitted) and is electrically connected with the counter electrode layer 20.

Thus, with the electrode connection portion 61 being joined with the electrode terminal 80 and the counter electrode connection portion 62 being joined with the counter electrode terminal 90, a current can be extracted from the opposite side of the substrate 60 from the power generation element 1.

Materials of the electrode connection portion 61 and the counter electrode connection portion 62 may include metal with high electric conductivity such as copper, silver, gold, aluminum, or the like, for example.

The insulation body layer 63 is a member has the plate shape that is formed of an insulation body and is a base of the substrate 60. A material of the insulation body layer 63 may include ceramics such as alumina and resin material such as epoxy series resin or phenol series resin. In a case where the insulation body layer 63 is formed of a material with high thermal conductivity such as alumina, the substrate 60 functions also as a heatsink.

The battery 109 can be manufactured by mounting the battery 100 on the substrate 60 by using solder and the like, for example.

Thus, in the battery 109, with the electrode terminal 80 and the counter electrode terminal 90 being joined to the substrate 60, the power generation element 1 is fixed by the substrate 60, and thus the flex resistance is improved. Particularly, since the wide joining area between the substrate 60 and the counter electrode terminal 90 can be secured with the power generation element 1 being joined through the counter electrode terminal 90 in the plate shape, even in a case where stress that causes the power generation element 1 to warp due to the hot-cold cycle and the like is generated, delamination of the power generation element 1 from the substrate 60 can be suppressed.

Note that, the electrode connection portion 61 and the counter electrode connection portion 62 each may not penetrate the insulation body layer 63 and may be a conductive pattern formed on the insulation body layer 63, for example. In this case, a current can be extracted from the power generation element 1 side of the substrate 60.

Additionally, in the battery 109, instead of the battery 100 according to the Embodiment 1, the configurations of the batteries according to the Modifications 1 to 8 of the Embodiment 1 may further include the substrate 60. For example, in a case where the solder layer is included like the battery 108, a battery including the substrate 60 can be implemented by reflow mounting the battery 108 directly.

### [Manufacturing Method of Battery]

Next, an example of a manufacturing method of the battery according to the present embodiment is described. A manufacturing method of the battery 108 described in the Modification 8 of the above-described Embodiment 1 is mainly described below. Additionally, in the following descriptions of the manufacturing method, a case where the electrode layer 10 is a positive electrode layer including a positive electrode active material layer and a positive electrode current collector as the electrode active material layer 12 and the electrode current collector 11 and the counter electrode layer 20 is a negative electrode layer including a negative electrode active material layer and a negative electrode current collector as the counter electrode active material layer 22 and the counter electrode current collector 21 is described.

First, each paste used for printing and formation of the positive electrode active material layer and the negative electrode active material layer is produced. As a solid electrolyte raw material used for a compound agent of each of the positive electrode active material layer and the negative electrode active material layer, for example, glass powder of Li₂S-P₂S₅-based sulfide in which an average particle diameter is about 10 µm and a triclinic-based crystal is the main component is prepared. As this glass powder, for example, glass powder having high ion conductivity of about 2 to 3 × 10⁻³S/cm can be used. As the positive electrode active material, for example, powder of Li, Ni, Co, Al composite oxide (LiNi_{0.8}Co_{0.15}Al_{0.05}O₂) in a layer form structure in which an average particle diameter is about 5 µm is used. Paste for the positive electrode active material layer in which a compound agent containing the above-described positive electrode active material and the above-described glass powder is dispersed into an organic solvent or the like is produced. Additionally, as the negative electrode active material, for example, powder of natural graphite in which an average particle diameter is about 10 µm is used. Paste for the negative electrode active material layer in which a compound agent containing the above-described negative electrode active material and the above-described glass powder is dispersed into an organic solvent or the like is produced similarly.

Next, as a material used as the positive electrode current collector and the negative electrode current collector, for example, copper foil of a thickness of about 30 µm is prepared. With a screen printing method, the paste for the positive electrode active material layer and the paste for the negative electrode active material layer are each printed in a predetermined shape and a thickness of 50 µm or greater and 100 µm or smaller on one surface of each copper foil. The paste for the positive electrode active material layer and the paste for the negative electrode active material layer are, for example, dried at 80°C or higher and 130°C or lower and have a thickness of 30 µm or greater and 60 µm or smaller. With this, the current collectors (copper foil) on which the positive electrode active material layer and the negative electrode active material layer are formed, that is, the positive electrode layer and the negative electrode layer (that is, the electrode layer 10 and the counter electrode layer 20) are obtained.

Next, paste for the solid electrolyte layer in which a compound agent containing the above-described glass powder is dispersed into an organic solvent or the like is produced. The above-described paste for the solid electrolyte layer is printed in a thickness of about 100 µm, for example, on a surface of an active material layer of each of the positive electrode layer and the negative electrode layer by using a metal mask. Thereafter, the positive electrode layer and the negative electrode layer on which the paste for the solid electrolyte layer is printed is dried at 80°C or higher and 130°C or lower.

Next, the solid electrolyte printed on the positive electrode active material layer of the positive electrode layer and the solid electrolyte printed on the negative electrode active material layer of the negative electrode layer are laminated facing each other in contact with each other.

Next, the laminated lamination body is pressurized by a press die. Specifically, an elastic body sheet of, for example, a thickness of 70 µm and elasticity of about 5 × 10⁶ Pa is inserted between the lamination body and the press die plate, that is, on a current collector upper surface. With this configuration, pressure is applied to the lamination body through by way of the elastic body sheet. Thereafter, for example, the press die is pressurized for 90 seconds while being warmed to 50°C at pressure of 300 MPa. With this, the battery cell 50 is obtained. In the battery 108, one battery cell 50 is used as the power generation element 1.

In a case where a battery including the power generation element 1g including the multiple battery cells 50 like the battery 107 is manufactured, the battery cells 50 produced as described above are prepared by the number to be included in the power generation element 1g. Then, thermosetting conductor paste containing silver particles of an average particle diameter of 0.5 µm is applied by screen printing in a thickness of about 5 µm as the connection layer 40 onto one of the current collectors of the positive electrode layer and the negative electrode layer of the battery cell 50, for example. Then, the battery cell 50 and another battery cell 50 are laminated so as to be connected in series through the applied conductor paste. That is, the battery cell 50 and the other battery cell 50 are laminated such that the counter electrode of the current collector on which the conductor paste is applied is arranged on the applied conductor paste, and the battery cell 50 and the other battery cell 50 are bonded with pressure. In order to increase the number of series connection, this processing is repeated by the number of the battery cells to be multilayered. Thereafter, the battery cell 50 and the other battery cell 50 are subjected to thermal curing treatment at higher than or equal to 100°C and lower than or equal to 130°C for more than or equal to 40 minutes and less than or equal to 100 minutes while being held to resist movement by applying a pressure of about 1 kg/cm² and are cooled to a room temperature, for example. With this, the power generation element 1g can be obtained.

Again, referring back to the descriptions of the manufacturing method of the battery 108, and next, thermosetting epoxy series resin as the material of the first side surface covering portion 71 is applied in a thickness of about greater than or equal to 20µ and smaller than or equal to 40 µm by screen printing on the first side surface 6 and the second side surface 7 that are the two side surfaces on the sides of short sides in plan view of the power generation element 1 produced as described above. In this case, the thermosetting epoxy series resin is concurrently applied to also a portion routed around a part of the side surfaces on the sides of long sides of the power generation element 1. Thereafter, the applied thermosetting epoxy series resin is cured at higher than or equal to 120°C and lower than or equal to 150°C for more than or equal to one hour and less than or equal to three hours. Next, the thermosetting epoxy series resin as the material of the first main surface covering portion 72 is applied in a thickness of greater than or equal to 10 µm and smaller than or equal to 40 µm by screen printing to a part of the counter electrode main surface 3. Thereafter, the applied thermosetting epoxy series resin is cured at higher than or equal to 120°C and lower than or equal to 150°C for more than or equal to one hour and less than or equal to three hours. Those application and curing are repeated by the number of the insulation layers, and the first insulation films 70 of greater than or equal to 20 µm and smaller than or equal to 120 µm is laminated and formed, for example. In a case where a battery including the second insulation film 75 and the like is manufactured as in the battery 102 and the like, the second insulation film 75 is formed on the counter electrode main surface 3 by a method similar to that of the first insulation film 70, for example.

Next, for example, thermosetting conductor paste containing silver particles of an average particle diameter of 0.5 µm is patterned and formed in a thickness of about 10 µm by screen printing on a part of the electrode main surface 2 and the counter electrode main surface 3. Next, thermosetting conductor paste containing silver particles is printed and applied on a surface of the first insulation film 70. Then, the terminal is formed by curing the power generation element 1 on which the conductor paste is applied at a temperature equal to or lower than the curing temperature during the formation of the insulation film that is 100°C or higher and 130°C or lower, for example, for 0.5 hours or more and 3 hours or less. If needed, the terminal may also be formed to be laminated as with the insulation film such that the terminal has a desired thickness.

Next, the solder layer is formed by the plating treatment. The plating treatment is performed after a portion other than a portion in which the solder plating film is to be formed is subjected to the resist processing by covering with a member into which the plating liquid is less likely to enter such as polyimide tape, for example. For example, as a foundation of the solder plating film, the nickel plating foundation film is formed on the terminal in a thickness of greater than or equal to 0.5 µm and smaller than or equal to 10 µm, and thereafter the tin plating film is formed on the nickel plating foundation film in a thickness of greater than or equal to 0.5 µm and smaller than or equal to 10 µm. With this solder plating treatment, reflow mounting is possible when the battery 108 is mounted on the substrate 60 and the like. Note that, in terms of the heat resistance of the solder plating film, a relatively hard nickel foundation film is formed in a thickness smaller than that of the terminal, for example. In this case, the thickness of the nickel plating foundation film is smaller than or equal to 5 µm, for example. With this, even in a rapid temperature change in a case of solder-mounting, cracking and delamination of the terminal due to stress generated in the nickel plating foundation film is less likely to occur. Therefore, the sticking properties of the solder plating film are improved. Additionally, in a case where the terminal contains silver, the terminal may be melted and mixed with the solder component through a defect generated by cracking or the like that is, for example, an opening air hole or a communicating clearance in the nickel plating foundation film, and the terminal may disappear. This phenomenon is also called "solder leaching". Thus, disappearance of the terminal caused by cracking and the like of the nickel plating foundation film can be suppressed by covering with the nickel foundation film of a thickness of smaller than or equal to 5 µm, for example. Note that, in the nickel plating foundation film, strong stress is generated in the film and a crack may occur if the film formation rate is fast; however, for example, in a case where the film is formed on a soft material such as resin, this problem is suppressed. Thus, with the conductive resin being used as the material of the terminal, the nickel foundation film can be formed at a high rate, and thus the productivity can be improved, for example.

In this way, the battery 108 is obtained. Note that, for the connection layer 40 and the terminal, the same conductor paste may be used in manufacturing of the battery 107, or different conductor paste with different curing temperatures or conductive particles may be used. For example, when it is desired to form an applied film of a thin layer, the conductive particles such as silver particles may be finer particles, or scale-like particles may be used as the conductive particles. Additionally, for the purpose of forming an alloy of the connection layer 40 or the terminal and the current collector with heat during the curing, a material containing metal of a low melting point may be used for the connection layer 40 or the terminal.

Note that, the manufacturing method of the battery and the order of the steps described are not limited to the above-described examples. For example, a part of the insulation film may be formed after the plating treatment. Specifically, in a case where a battery including the second insulation film 75 and the like is manufactured as in the battery 102 and the like, the second insulation film 75 may be formed after the plating treatment.

Additionally, in the above-described manufacturing method, an example in which the paste for the positive electrode active material layer, the paste for the negative electrode active material layer, the paste for the solid electrolyte layer, and the conductor paste are applied by printing is indicated; however, it is not limited thereto. As the printing method, for example, a doctor blade method, a calendar method, a spin coating method, a dip coating method, an inkjet method, an offset method, a die coating method, a spray method, or the like may be used.

Moreover, the first side surface covering portion 71 and the first main surface covering portion 72 may be formed by applying the thermosetting epoxy series resin and the like all at once. Furthermore, the terminal covered with the solder plating film may be joined to the power generation element 1. Additionally, in a case where a battery including the second insulation film 75 and the like is manufactured as in the battery 102 and the like, the first insulation film 70 and the second insulation film 75 may be formed by applying the thermosetting epoxy series resin and the like all at once.

Furthermore, the first insulation film 70 may be formed by immersing the side surface of the power generation element 1 into thermosetting resin in the form of liquid to cover the side surface of the power generation element 1 with the thermosetting resin in the form of liquid and thermal curing.

In the above-described manufacturing method, the thermosetting conductor paste containing silver metal particles is indicated as an example of the conductor paste; however, it is not limited thereto. As the conductor paste, thermosetting conductor paste containing highly conductive metal particles of a high melting point (for example, 400°C or higher), metal particles of a low melting point (preferably, equal to or lower than the curing temperature of the conductor paste and, for example, 300°C or lower), and resin may be used. A material of the highly conductive metal particles of a high melting point may include silver, copper, nickel, zinc, aluminum, palladium, gold, platinum, or an alloy of a combination of those metals, for example. A material of the metal particles of a low melting point in which the melting point is 300°C or lower may include tin, a tin-zinc alloy, a tin-silver alloy, a tin-copper alloy, a tin-aluminum alloy, a tin-lead alloy, indium, an indium-silver alloy, an indium-zinc alloy, an indium-tin alloy, bismuth, a bismuth-silver alloy, a bismuth-nickel alloy, a bismuth-tin alloy, a bismuth-zinc alloy, a bismuth-lead alloy, or the like, for example. With a use of the conductor paste containing such metal particles of a low melting point, even at a curing temperature lower than the melting point of the highly conductive metal particles of the high melting point, solid-phase and liquid-phase reaction proceeds in a portion in which the metal particles in the conductor paste and the metal forming the current collector are put in contact with each other. Thus, in an interface between the conductor paste and the surface of the current collector, a diffusion region that is alloyed by the solid-phase and liquid-phase reaction is formed around the above-described contact portion. When silver or a silver alloy is used for the conductive metal particles and copper is used for the current collector, an example of the alloy to be formed may include a silver-copper-based alloy of a highly conductive alloy. Additionally, with the combination of the conductive metal particles and the current collector, a silver-nickel alloy, a silver-palladium alloy, or the like may also be formed. With this configuration, the conductor paste and the current collector are joined to each other more firmly, and, for example, the operational effect is obtained that delamination of the joining portion between the conductor paste and the current collector caused by the cooling/heating cycle or impact is suppressed.

Note that, the shape of the highly conductive metal particles of a high melting point and the metal particles of a low melting point may be any shape such as a spherical shape, a scale shape, or a needle shape. Additionally, particle sizes of the highly conductive metal particles of a high melting point and the metal particles of a low melting point are not particularly limited. For example, with a smaller particle size, alloying reaction and diffusion proceed at a lower temperature; for this reason, the particle size and shape are selected appropriately taking into consideration an effect of heat history on the process design and the battery characteristics.

Moreover, the resin used for the thermosetting conductor paste may be anything as long as it functions as a binder for binding, and additionally, resin with appropriate printing performance, applying performance, and the like depending on the employed manufacturing process is selected. The resin used for the thermosetting conductor paste contains thermosetting resin, for example. The thermosetting resin may include the thermosetting resin that is exemplified as the material of the above-described terminal, for example. For the thermosetting resin, only one of those materials may be used, or a combination of two or more of those materials may be used.

Moreover, a battery that is not described in detail above out of the batteries according to the Embodiment 1 or the modifications of the Embodiment 1 can also be formed by applying a method similar to that described above in accordance with the shape and the number of the constituents of each battery.

### (Embodiment 2)

Next, an Embodiment 2 is described. Note that, in the following descriptions of the Embodiment 2, different points from the Embodiment 1 and the modifications of the Embodiment 1 are mainly described, and descriptions of common points are omitted or simplified.

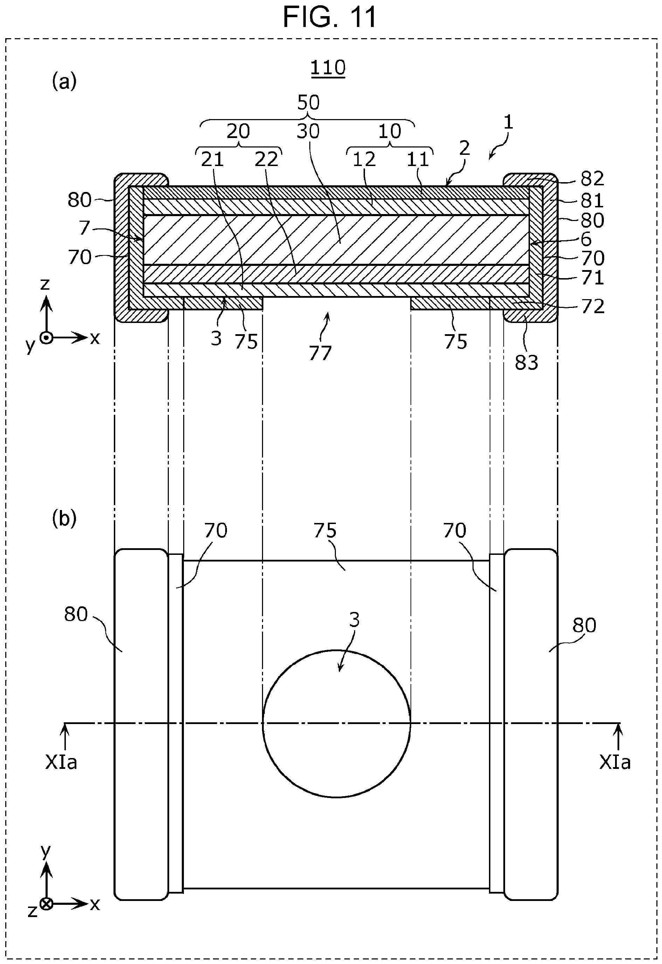

Fig. 11 is a sectional view and a plan view illustrating a schematic configuration of a battery according to the Embodiment 2. Specifically, Fig. 11(a) is a sectional view of a battery 110 according to the present embodiment, and Fig. 11(b) is a plan view in which the battery 110 is viewed from the lower side in the z-axis direction. In Fig. 11(a), a cross section at a position indicated by the XIa-XIa line in Fig. 11(b) is illustrated.

As illustrated in Fig. 11, the battery 110 according to the Embodiment 2 is different from the battery 102 in the Modification 2 of the Embodiment 1 in that the battery 110 does not include the counter electrode terminal 90. That is, the battery 110 includes the power generation element 1, the first insulation film 70, the electrode terminal 80, and the second insulation film 75.

In the battery 110, the opening 77 formed in the second insulation film 75 exposes the counter electrode main surface 3 (specifically, the counter electrode current collector 21) to the outer world. With this, the portion in the counter electrode main surface 3 that is exposed by the opening 77 can be joined with the substrate and the like. Thus, as with the Embodiment 1, a current can be extracted from the power generation element 1 in which the layers are bound by the first insulation film 70 by using the electrode terminal 80 and the portion in the counter electrode main surface 3 that is exposed by the opening 77. Additionally, with the electrode terminal 80 and the portion in the counter electrode main surface 3 that is exposed by the opening 77 of the battery 110 being joined with the substrate, particularly, the battery 110 with excellent flex resistance can be obtained. Additionally, since the battery 110 does not include the counter electrode terminal, no failure such as delamination of the counter electrode terminal occurs. Moreover, the battery 110 can be manufactured based on the manufacturing method of the battery according to the above-described Embodiment 1 and modifications, and a portion that can be joined with the substrate can be provided in the battery 110 only by forming the opening 77 in the second insulation film 75; thus, the battery 110 can be manufactured with good productivity.

In the example illustrated in Fig. 11, the plan view shape of the opening 77 is circular; however, it is not particularly limited, and the shape may be other than circular such as rectangular, oval, polygonal, or the like. Additionally, the opening 77 may be a slit formed to divide the second insulation film 75 into two or more.

As the size and the position of the opening 77 in plan view, the size and the position described for the counter electrode terminal 90 in the Embodiment 1 are applicable, for example.

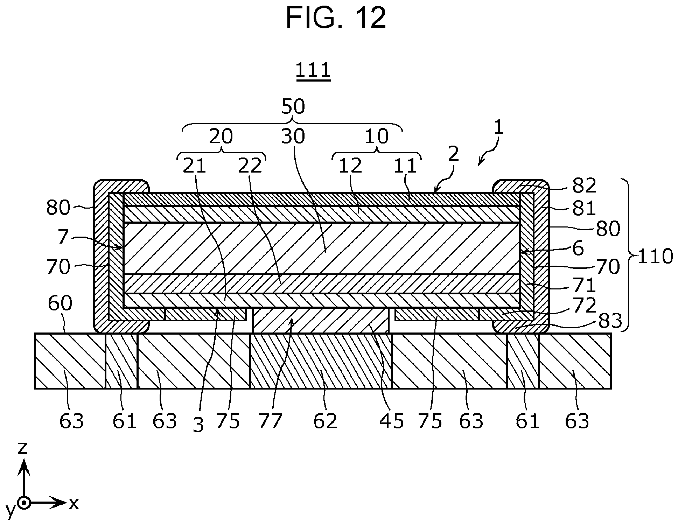

The battery 110 may be mounted on the substrate 60 as with the Modification 9 of the Embodiment 1. Fig. 12 is a sectional view illustrating a schematic configuration of another battery according to the present embodiment. As illustrated in Fig. 12, a battery 111 further includes a connection portion 45 and the substrate 60 in addition to the configuration of the battery 110.

In the battery 111, the second insulation film 75 is positioned between the counter electrode layer 20 and the substrate 60.

The connection portion 45 electrically connects the counter electrode layer 20 and the counter electrode connection portion 62. The connection portion 45 is formed of a conductive member such as solder or conductive resin, for example. The connection portion 45 is in contact with the counter electrode main surface 3 and the counter electrode connection portion 62. The connection portion 45 joins the portion in the counter electrode main surface 3 that is exposed by the opening 77 with the counter electrode connection portion 62. That is, the counter electrode connection portion 62 is joined with the connection portion 45 through the portion in the counter electrode main surface 3 that is exposed by the opening 77 and is electrically connected with the counter electrode layer 20.

Thus, also in the battery 111, since the substrate 60 that is joined with the power generation element 1 through the electrode terminal 80 and the portion in the counter electrode main surface 3 that is exposed by the opening 77 is included, an effect similar to that of the battery 109 according to the Modification 9 of the Embodiment 1 can be obtained.

### (Embodiment 3)

An Embodiment 3 is described below. Note that, in the following descriptions of the Modification 3, different points from the Embodiment 1, the modifications of the Embodiment 1, and the Embodiment 2 are mainly described, and descriptions of common points are omitted or simplified.

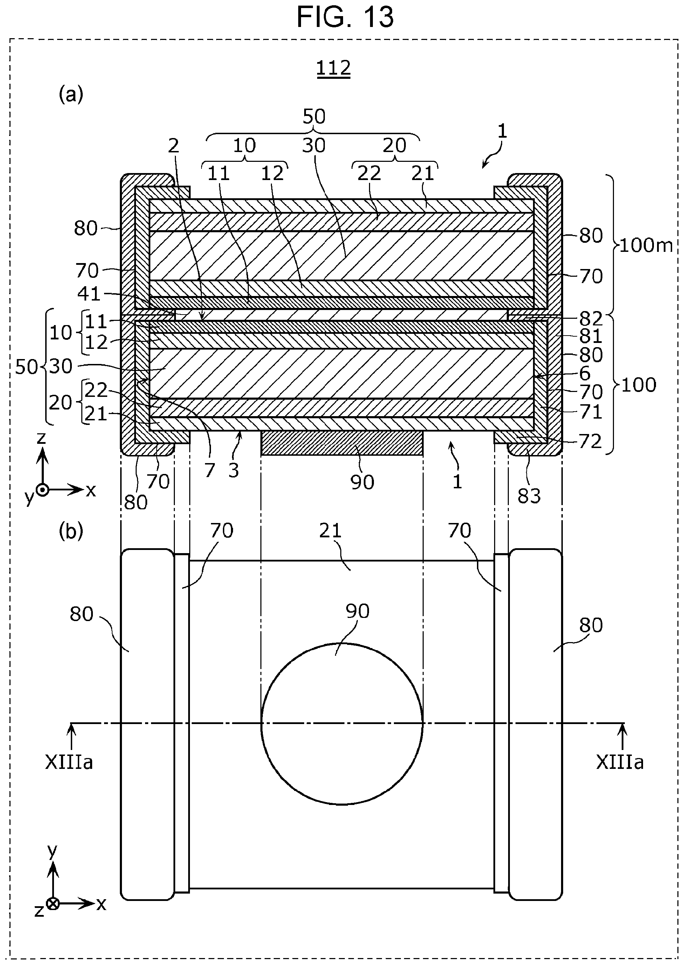

Fig. 13 is a sectional view and a plan view illustrating a schematic configuration of a laminated battery according to the Embodiment 3. Specifically, Fig. 13(a) is a sectional view of a laminated battery 112 according to the present embodiment, and Fig. 13(b) is a plan view in which the laminated battery 112 is viewed from the lower side in the z-axis direction. In Fig. 13(a), a cross section in a position indicated by a XIIIa-XIIIa line in Fig. 13(b) is illustrated.

As illustrated in Fig. 13, the laminated battery 112 according to the Embodiment 3 includes the battery 100, a battery 100m, and a connection layer 41. The battery 100 is an example of a first battery, and the battery 100m is an example of a second battery. The battery 100m has the same configuration as that of the battery 100 except that the battery 100m does not include the counter electrode terminal 90. In the laminated battery 112, a laminated battery in which multiple power generation elements 1 are laminated is formed by laminating the battery 100 and the battery 100m.

In the example illustrated in Fig. 13, the number of the laminated power generation elements 1 is two; however, the number may be three or more. The multiple power generation elements 1 are laminated such that the electrode main surfaces 2 of adjacent power generation element 1 out of the multiple power generation elements 1 are adjacent to each other through the connection layer 41 without sandwiching the power generation element 1. In other words, the adjacent power generation elements 1 are laminated such that the vertical positional relationship between the electrode main surface 2 and the counter electrode main surface 3 of each power generation element 1 is inverse. With this, the power generation elements 1 of the laminated battery 112 can form parallel connection. Thus, in the laminated battery 112, the multiple battery cells 50 are electrically connected in parallel and laminated. Additionally, with the parallel connection laminated battery 112 being formed of the battery 100 and the battery 100m including the same power generation element 1, the production management performance and the productivity are improved.

The connection layer 41 is formed of a conductive material having electronic conductivity, for example. With this, homopolar current collectors are electrically connected to each other, and thus a current is easily extracted from the power generation element 1. The conductive material forming the connection layer 41 is not particularly limited; however, as the conductive material, the conductive material exemplified in the descriptions of the above-described terminal can be used. Note that, the connection layer 41 may be an electric insulation body. The connection layer 41 may be formed of the resin or the like exemplified in the descriptions of the above-described insulation film, for example. The laminated battery 112 do not have to include the connection layer 41.

In the laminated battery 112, one or more batteries 100m are laminated on the electrode main surface 2 of the battery 100. Thus, in the laminated battery 112, the battery 100 including the counter electrode terminal 90 is arranged on the lowermost layer. With this, the laminated battery 112 can be easily mounted on the substrate.

In the example illustrated in Fig. 13, the battery 100m has the same configuration as that of the battery 100 except that the battery 100m does not include the counter electrode terminal 90; however, it is not limited thereto. For example, the laminated battery 112 may include the battery 100 instead of the battery 100m. Additionally, as long as the laminated battery 112 has a configuration in which the battery 100 is arranged on the lowermost layer, other laminated batteries are not particularly limited, and as long as the battery includes the power generation element, a battery other than the battery 100m may be applied. Moreover, the electrode terminal 80 of the battery 100 and the electrode terminal 80 of the battery 100m may be formed individually or may be formed integrally.

The laminated battery 112 can be manufactured by joining the battery 100 and the battery 100m manufactured based on the manufacturing methods of the batteries according to the above-described Embodiment 1 and modifications through the connection layer 41, for example.

Thus, since the laminated battery 112 includes the battery 100 according to the Embodiment 1 and the battery 100m including the first insulation film 70 as with the battery 100, an effect similar to that of the Embodiment 1 can be obtained. Additionally, with the multiple power generation elements 1 being connected in parallel, the laminated battery 112 with a large capacity can be implemented.

Note that, the laminated battery 112 may include the battery according to each modification of the Embodiment 1 or the Embodiment 2 instead of the battery 100 according to the Embodiment 1.

### (Other Embodiments)

The battery and the laminated battery according to the present disclosure are described above based on the Embodiments and the Modifications; however, the present disclosure is not limited to those Embodiments and Modifications. An Embodiment with various Modifications apparent to those skilled in the art and another mode constructed by combining some of the constituents in the Embodiments may be included in the scope of the present disclosure without departing from the gist of the present disclosure.

For example, in the above-described Modification 7 of the Embodiment 1, the multiple battery cells are electrically connected in series and laminated, and in the above-described Embodiment 3, the multiple battery cells are electrically connected in parallel; however, it is not limited thereto. A battery in which a battery or a laminated battery in which multiple battery cells are connected electrically in series and a battery or a laminated battery in which multiple battery cells are connected electrically in parallel are combined and laminated may be implemented.

Additionally, for example, in the above-described embodiments and modifications, the entire counter electrode terminal is overlapped with the counter electrode main surface in plan view; however, it is not limited thereto. A part of the counter electrode terminal may include a portion protruding from the counter electrode terminal in plan view.

Moreover, various changes, replacement, addition, omission, and the like may be made in the above-described Embodiments within the scope of claims or the scope of equivalent thereof.

### Industrial Applicability

The battery and the laminated battery according to the present disclosure can be used as a secondary battery such as an all-solid-state battery used in various electronic devices, automobiles, or the like, for example.

### Reference Signs List

1, 1g power generation element
2, 2g electrode main surface
3, 3g counter electrode main surface
6, 6g first side surface
7, 7g second side surface
10 electrode layer
11 electrode current collector
12 electrode active material layer
20 counter electrode layer
21 counter electrode current collector
22 counter electrode active material layer
30 solid electrolyte layer
40, 41 connection layer
45 connection portion
50 battery cell
60 substrate
61 electrode connection portion
62 counter electrode connection portion
63 insulation body layer
70, 70c, 70g first insulation film
71, 71g first side surface covering portion
72, 72c, 72g first main surface covering portion
75, 75f, 75h second insulation film
77 opening
80, 80d, 80g electrode terminal
81, 81g second side surface covering portion
82, 82d, 82g electrode contact portion
83, 83g second main surface covering portion
84 end portion
85 electrode solder layer
90, 90a, 90e counter electrode terminal
91 outer periphery edge portion
95 counter electrode solder layer
100, 100m, 101, 102, 103, 104, 105, 106, 107, 108, 108A, 109, 110, 111 battery
112 laminated battery

## Claims

1. A battery, comprising:
a power generation element including at least one battery cell including an electrode layer, a counter electrode layer, and a solid electrolyte layer positioned between the electrode layer and the counter electrode layer;
a first insulation film;
an electrode terminal electrically connected to the electrode layer; and
a counter electrode terminal electrically connected to the counter electrode layer, wherein
the power generation element includes an electrode main surface that is a main surface formed of a surface of the electrode layer, a counter electrode main surface that faces the electrode main surface and is a main surface formed of a surface of the counter electrode layer, and a side surface that connects the electrode main surface and the counter electrode main surface,
the first insulation film includes a first side surface covering portion that covers the side surface and a first main surface covering portion that is connected with the first side surface covering portion and covers the counter electrode main surface,
the electrode terminal includes a second side surface covering portion that covers the first side surface covering portion and an electrode contact portion that is connected with the second side surface covering portion and is joined to the electrode main surface,
the counter electrode terminal is joined to the counter electrode main surface, and
the electrode terminal further includes a second main surface covering portion that is connected with the second side surface covering portion and covers the first main surface covering portion.

2. The battery according to claim 1, wherein
the counter electrode terminal has a plate shape, and an entirety of the counter electrode terminal is overlapped with the counter electrode main surface in plan view.

3. The battery according to claim 1 or 2, wherein
the counter electrode terminal is one of a plurality of counter electrode terminals.

4. The battery according to any one of claims 1 to 3, wherein
at least one of the electrode terminal or the counter electrode terminal includes conductive resin.

5. The battery according to any one of claims 1 to 4, further comprising:
an electrode solder layer that covers the electrode terminal and contains solder as a main component; and
a counter electrode solder layer that covers the counter electrode terminal and contains solder as a main component.

6. The battery according to claim 5, wherein
each of the electrode solder layer and the counter electrode solder layer is formed of a solder plating film.

7. The battery according to claim 6, wherein
the solder plating film includes a nickel plating foundation film and a tin plating film formed on the nickel plating foundation film.

8. The battery according to any one of claims 1 to 7, further comprising:
a substrate that is arranged to face the counter electrode main surface, wherein
the counter electrode terminal is positioned between the substrate and the counter electrode layer, and
the substrate includes
an electrode connection portion that is joined with the electrode terminal and is electrically connected with the electrode layer and
a counter electrode connection portion that is joined with the counter
electrode terminal and is electrically connected with the counter electrode layer.

9. The battery according to any one of claims 1 to 8, further comprising:
a second insulation film that covers a part of the counter electrode main surface, wherein
the second insulation film covers an outer periphery of the counter electrode terminal in plan view.

10. The battery according to claim 9, wherein
an outer periphery edge portion of the counter electrode terminal in plan view is sandwiched between the counter electrode main surface and the second insulation film.

11. A battery, comprising:
a power generation element including at least one battery cell including an electrode layer, a counter electrode layer, and a solid electrolyte layer positioned between the electrode layer and the counter electrode layer;
a first insulation film;
a second insulation film; and
an electrode terminal electrically connected to the electrode layer, wherein
the power generation element includes an electrode main surface that is a main surface formed of a surface of the electrode layer, a counter electrode main surface that faces the electrode main surface and is a main surface formed of a surface of the counter electrode layer, and a side surface that connects the electrode main surface and the counter electrode main surface,
the first insulation film includes a first side surface covering portion that covers the side surface and a first main surface covering portion that is connected with the first side surface covering portion and covers the counter electrode main surface,
the second insulation film covers the counter electrode main surface,
an opening that exposes a part of the counter electrode main surface is formed in the second insulation film,
the electrode terminal includes a second side surface covering portion that covers the first side surface covering portion, and an electrode contact portion that is connected with the second side surface covering portion and is joined to the electrode main surface, and
the electrode terminal further includes a second main surface covering portion that is connected with the second side surface covering portion and covers the first main surface covering portion.

12. The battery according to claim 11, further comprising:
a substrate that is arranged to face the counter electrode main surface, wherein
the second insulation film is positioned between the substrate and the counter electrode layer, and
the substrate includes
an electrode connection portion that is joined with the electrode terminal and is electrically connected with the electrode layer and
a counter electrode connection portion that is joined with a portion in the counter electrode main surface exposed by the opening and is electrically
connected with the counter electrode layer.

13. The battery according to any one of claims 9 to 12, wherein
the first insulation film and the second insulation film are connected with each other.

14. The battery according to any one of claims 9 to 13, wherein
the second insulation film contains resin.

15. The battery according to any one of claims 1 to 14, wherein
in plan view, a length of the electrode contact portion from the side surface is longer than a length of the second main surface covering portion from the side surface.

16. The battery according to any one of claims 1 to 15, wherein
the first insulation film covers an end portion of the electrode terminal.

17. The battery according to any one of claims 1 to 16, wherein
the side surface includes a first side surface and a second side surface facing the first side surface, and the first insulation film covers the first side surface and the second side surface.

18. The battery according to any one of claims 1 to 17, wherein
the first insulation film contains resin.

19. The battery according to any one of claims 1 to 18, wherein
the at least one battery cell includes a plurality of battery cells, and
the plurality of battery cells are electrically connected in series and laminated.

20. The battery according to any one of claims 1 to 19, wherein
the solid electrolyte layer includes solid electrolyte having lithium-ion conductivity.

21. A laminated battery, comprising:
one first battery; and
one or more second batteries laminated on the one first battery, wherein
the one first battery is the battery according to any one of claims 1 to 20, and
the one or more second batteries are laminated on the electrode main surface of the one first battery.
